(19) Europäisches Patentamt
European Patent Office
Office européen des brevets

(11) **EP 2 191 235 B1**

(12) **EUROPÄISCHE PATENTSCHRIFT**

(45) Veröffentlichungstag und Bekanntmachung des Hinweises auf die Patenterteilung:
**23.02.2011 Patentblatt 2011/08**

(21) Anmeldenummer: **08802032.6**

(22) Anmeldetag: **11.09.2008**

(51) Int Cl.:
***G01D 3/036*** (2006.01)

(86) Internationale Anmeldenummer:
**PCT/EP2008/007472**

(87) Internationale Veröffentlichungsnummer:
**WO 2009/036923 (26.03.2009 Gazette 2009/13)**

(54) **VERFAHREN ZUR ABSCHNITTSWEISEN BESTIMMUNG EINES PARAMETERABHÄNGIGEN KORREKTURWERTNÄHERUNGSVERLAUFS UND SENSORANORDNUNG**

METHOD FOR DETERMINING A PARAMETER-DEPENDENT CORRECTION VALUE APPROXIMATION CURVE IN SECTIONS AND SENSOR ARRANGEMENT

PROCÉDÉ POUR DÉTERMINER PAR SEGMENTS UNE COURBE D'APPROXIMATION DE VALEURS DE CORRECTION DÉPENDANT DE PARAMÈTRES ET SYSTÈME DE DÉTECTION CORRESPONDANT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **18.09.2007 DE 102007044471**

(43) Veröffentlichungstag der Anmeldung:
**02.06.2010 Patentblatt 2010/22**

(73) Patentinhaber: **Fraunhofer-Gesellschaft zur Förderung der angewandten Forschung e.V.
80686 München (DE)**

(72) Erfinder:
• **HOHE, Hans-Peter
91332 Heiligenstadt (DE)**

• **HACKNER, Michael
93155 Hemau OT Haag (DE)**
• **STAHL-OFFERGELD, Markus
91058 Erlangen (DE)**

(74) Vertreter: **Hersina, Günter
Schoppe, Zimmermann, Stoeckeler & Zinkler
Postfach 246
82043 Pullach (DE)**

(56) Entgegenhaltungen:
**EP-A- 1 503 181       WO-A-96/41120
DE-A1- 19 642 699    US-A- 5 062 062
US-B1- 6 396 259**

**Beschreibung**

Ausführungsbeispiele der vorliegenden Erfindung beziehen sich auf Verfahren zur Bestimmung eines Korrekturwertnäherungsverlaufs von Sensoranordnungen, wie sie beispielsweise in vielen Bereichen der Technologie eingesetzt werden.

Bei vielen Sensoren bzw. Sensoranordnungen treten aufgrund herstellungsbedingter, umweltbedingter, betriebsbedingter oder anderer Effekte Verfälschungen der mit ihnen erfassten Messwerte auf. Je nach Sensor, Sensortyp oder Effekt können die betreffenden Verfälschungen sich unterschiedlich auf die ermittelten Messwerte auswirken. Neben einem einfachen Offset, also einer Verschiebung oder einem Versatz der betreffenden Messwerte um einen konstanten oder parameterabhängigen Wert, können auch komplexere Verfälschungen auftreten. So kann beispielsweise ein Verhältnis zwischen einer auf den Sensor einwirkenden Messgröße und dem von dem Sensor erfassten zugehörigen Messwert eine Parameterabhängigkeit aufweisen. Ebenso kann sich zwischen der auf den Sensor einwirkenden Messgröße und dem von dem Sensor erfassten Messwert eine parameterabhängige nicht-lineare Kennlinie ergeben.

Ausgehend hiervon besteht daher ein Bedarf einer Verbesserung der Messgenauigkeit durch Implementierung eines verbesserten Korrekturwertnäherungsverlaufs, der gleichzeitig eine vereinfachte Herstellung des Sensors ermöglicht.

Die zugrunde liegende Problematik wird durch Ausführungsbeispiele der vorliegenden Erfindung überwunden, wie beispielsweise durch ein Verfahren gemäß einem der Ansprüche 1 oder 12, einer Sensoranordnung gemäß Anspruch 13, einer Hall-Sensoranordnung gemäß Anspruch 21 oder einem Programm gemäß Anspruch 22.

Ausführungsbeispielen der vorliegenden Erfindung liegt hierbei die Erkenntnis zugrunde, dass eine Verbesserung der Messgenauigkeit durch Berücksichtigung eines verbesserten Korrekturnäherungsverlaufs erzielt werden kann, wobei ein solch verbesserter Korrekturnäherungsverlauf auf Basis eines einzigen Anfangskorrekturwertes und eines ersten Parameterkoeffizienten ermittelbar ist. Dies wird im Rahmen von Ausführungsbeispielen der vorliegenden Erfindung dadurch erreicht, dass ein Korrekturnäherungsverlauf abschnittsweise bestimmt wird, wobei ein erster Teilabschnitt des Korrekturnäherungsverlaufs in einem ersten Paramterbereich durch einen vorbestimmten Anfangskorrekturwert und einen ersten Parameterkoeffizienten bezüglich eines Anfangsparameterwerts vorgegeben ist.

Ist eine vorbestimmte Bedingung eines der Sensoranordnung zugeordneten ersten Parameterwerts erfüllt oder eine andere Auslösebedingung erfüllt, wird zunächst ein erster Messsignalwert bestimmt, der dem Messwert der Sensoranordnung und gleichzeitig einem ersten Messsignal eines Sensorelements der Sensoranordnung entspricht. Durch ein Ändern des der Sensoranordnung zugeordneten ersten Parameterwerts, wobei ein der Sensoranordnung zugeordneter zweiter Parameterwert erhalten wird, kann nun bei diesem zweiten Parameterwert ein zweiter Messsignalwert bestimmt werden. Hierdurch ist es möglich, einen zweiten Teilabschnitt des Korrekturnäherungsverlaufs für einen zweiten Parameterbereich basierend auf einem den zweiten Teilabschnitt beschreibenden funktionalen Zusammenhang, dem ersten Parameterwert, dem zweiten Parameterwert, dem ersten Messsignalwert, dem zweiten Messsignalwert und dem Anfangskorrekturwert zu ermitteln. Hierbei liegt bei Ausführungsbeispielen der vorliegenden Erfindung der erste Parameterwert in dem den zweiten Teilabschnitt des Korrekturwertnäherungsverlaufs zugrunde liegenden zweiten Parameterbereich.

Im Unterschied zu einem Messwert oder einem Messsignalwert ist ein Korrekturwert im Allgemeinen nur unter besonderen Bedingungen messtechnisch zugänglich. Im Allgemeinen ist ein solcher Korrekturwert grundsätzlich nicht mehr zugänglich, wenn beispielsweise der Sensor oder die Sensoranordnung bereits einem Einfluss ausgesetzt ist, auf den der Sensor oder die Sensoranordnung mit einer Änderung seiner Messsignale bzw. Messwerte reagiert. Dies trifft in sehr vielen Fällen auf Sensoren zu, die im Rahmen von Baugruppen oder anderen technischen Geräten eingesetzt werden. Darüber hinaus kann es je nach Sensor, Typ des Sensors und Empfindlichkeit des Sensors dazu kommen, dass mit Hilfe eines solchen Sensors ein Korrekturwert nicht außerhalb eines speziell abgeschirmten oder eines speziell stabilisierten Raums ermittelbar ist. Um einen entsprechenden Korrekturwert folglich zu bestimmen, ist es in vielen Fällen unabdingbar, den Sensor in einem bezogen auf den Einfluss, auf den der Sensor empfindlich ist, abgeschirmten oder speziell stabilisierten Raum zu vermessen. Als Beispiel soll an dieser Stelle nur ein Magnetfeldsensor genannt werden, bei dem eine Bestimmung eines solchen Korrekturwerts, beispielsweise eines Offset-Wertes je nach Empfindlichkeit des Sensors nur in einem magnetisch hinreichend abgeschirmten Raum durchgeführt werden kann, da gegebenenfalls bereits durch das Erdmagnetfeld eine entsprechende Verfälschung oder Änderung des Messwerts zu befürchten ist. Selbstverständlich können entsprechende Verfälschungen bei Messung der absoluten Korrekturwerte auftreten, wenn diese nicht in entsprechend abgeschirmten oder stabilisierten Räumen durchgeführt werden.

Ausführungsbeispiele der vorliegenden Erfindung werden nachfolgend unter Bezugnahme auf die beiliegenden Zeichnungen näher erläutert.

Fig. 1a     zeigt ein Flussdiagramm eines Ausführungsbei- spiels eines Verfahrens zur abschnittsweisen Be- stimmung eines parameterabhängigen Korrekturwert- näherungsverlaufs;

Fig. 1b     zeigt ein Beispiel eines parameterabhängigen Korrekturwertnäherungsverlauf, wie er mit einem Ausführungsbeispiel eines Verfahrens zur ab- schnittsweisen Bestimmung eines parameterabhängi- gen Korrekturwertnäherungsverlaufs bestimmbar ist;

Fig. 2      zeigt ein Blockschaltbild eines Ausführungsbei- spiels einer Sensoranordnung;

Fig. 3      zeigt ein Blockschaltbild eines Ausführungsbei- spiels einer Hall-Sensoranordnung; und

Fig. 4      zeigt beispielhaft einen Vergleich eines tempera- turabhängigen Korrekturwertverlaufs und eines ab- schnittsweise bestimmten Korrekturnäherungsver- laufs.

Bei vielen Sensoren, die eine Bestimmung eines Einflusses in Form eines Messwertes auf eine entsprechende Messgröße hin ermöglichen, werden die Messwerte durch Effekte häufig verfälscht, die eine Berücksichtigung von Korrekturwerten oder Korrekturwertnäherungen zur Verbesserung der mit dem Sensor erzielbaren Messgenauigkeit ratsam machen. Die unterschiedlichen Effekte, die zu einer Verfälschung der Messwerte gegenüber der auf den Sensor einwirkenden Messgröße führen, können zu unterschiedlichen Verfälschungen der Messwerte bezüglich der zugrunde liegenden Messgrößen führen. Neben einem einfachen, gegebenenfalls parameterabhängigen Offset, also einer Verschiebung bzw. eines Versatzes der Messwerte gegenüber der Messgröße, können komplexere Verfälschungen ebenfalls auftreten. Neben einer parameterabhängigen oder messwertabhängigen Änderung einer Steigung der Messwerte bezogen auf eine Änderung der Messgrößen können auch komplexere, beispielsweise nicht-lineare Verfälschungen auftreten.

Um solchen Verfälschungen begegnen zu können, ist es daher an vielen Stellen ratsam, entsprechende Korrekturwerte oder Korrekturwertnäherungen im Rahmen einer Messung mit einem entsprechenden Sensor zu berücksichtigen. Korrekturwerte oder Korrekturwertnäherungen können dann beispielsweise als additive, multiplikative oder im Rahmen komplexerer Korrekturen der Messwerte des Sensors, der auch Sensoranordnung bezeichnet wird, erfolgen.

Die im Folgenden beschriebene Vorgehensweise zur abschnittsweisen Bestimmung eines parameterabhängigen Korrekturwertnäherungsverlaufs zur Messsignalkorrektur einer Sensoranordnung kann beispielsweise eingesetzt werden, um den temperaturabhängigen Spinning-Current-Offset von Hall-Sensoren weiter in den Griff zu bekommen. Die nachfolgenden Ausführungen werden aber deutlich machen, dass die erfindungsgemäße Vorgehensweise auf alle offset-, messfehler- oder fehlersignal-behafteten Sensoranordnungen anwendbar ist, wobei neben Temperaturänderungen, Druckänderungen auch jegliche sich ändernde Umgebungseinflüsse als ein den Messwert beeinflussenden bzw. störenden Parameters des Sensors angesehen werden können.

Bevor im Einzelnen auf die Ausführungsbeispiele der vorliegenden Erfindung und ihre Funktionsweise eingegangen wird, wird darauf hingewiesen, dass zur Vereinfachung der Darstellung funktionsähnliche und funktionsgleiche Elemente, Schaltungen und andere Objekte mit gleichen bzw. ähnlichen Bezugszeichen bezeichnet werden. Ferner wird an dieser Stelle darauf hingewiesen, dass entsprechende Beschreibungsabschnitte, die sich auf funktionsgleiche oder funktionsähnliche Elemente, Objekte und Schaltungen beziehen, gegeneinander ausgetauscht werden können, sofern nicht explizit das Gegenteil angegeben ist. Ferner wird zur Vereinfachung der Darstellung im weiteren Verlauf auf zusammenfassende Bezugszeichen für mehrfach in einem Ausführungsbeispiel auftretende Komponenten zurückgegriffen, sofern nicht auf einzelne Elemente oder Objekte Bezug genommen wird. Auch dies dient zur Vereinfachung und klareren Struktur der Beschreibung.

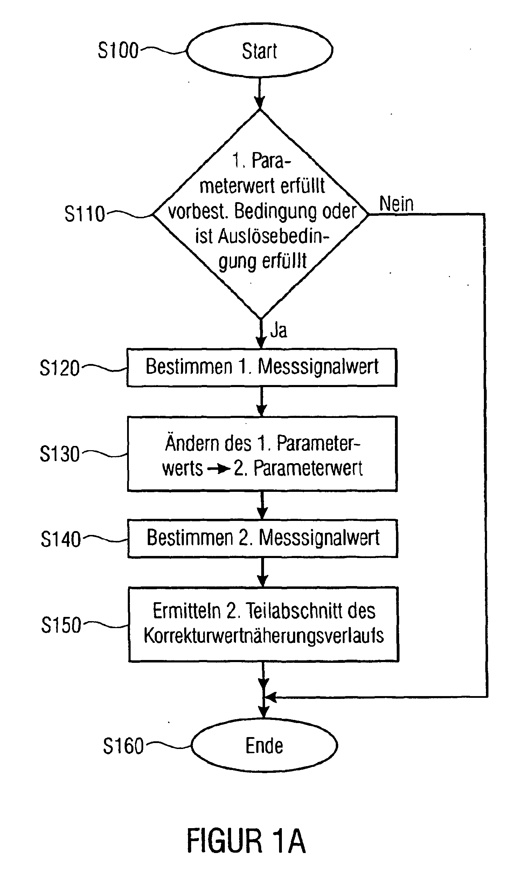

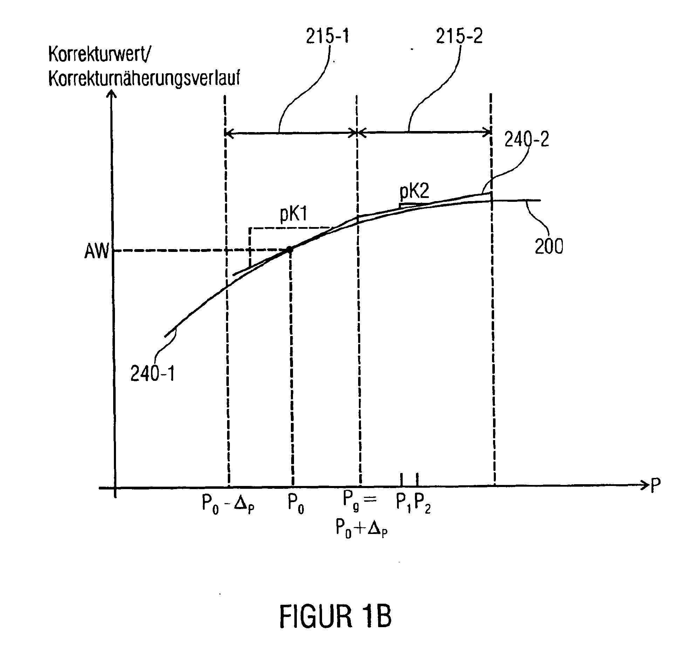

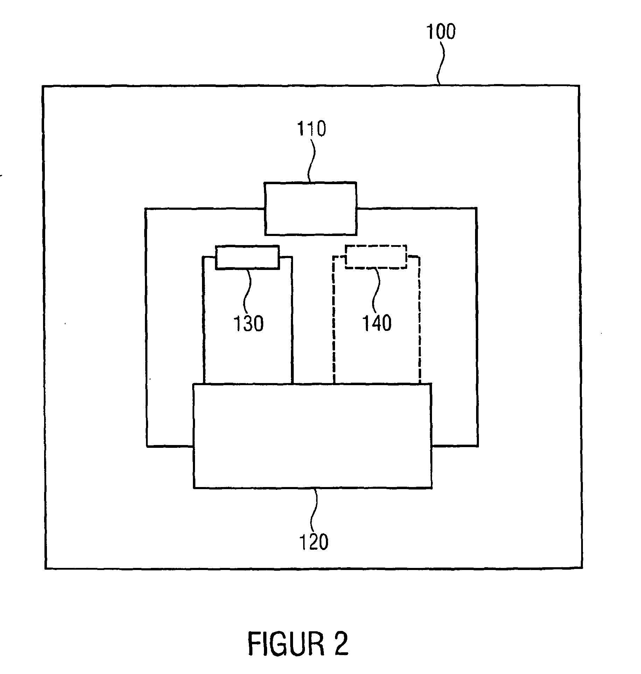

Bezug nehmend auf die Fig. 1a, 1b und 2 bis 4 wird nun ein erstes Ausführungsbeispiel eines Verfahrens zur abschnittsweisen Bestimmung eines parameterabhängigen Korrekturwertnäherungsverlaufs beschrieben, wobei Fig. 1a ein Flussdiagramm eines Ausführungsbeispiels dieses Verfahrens und Fig. 1b ein Beispiel eines entsprechenden parameterabhängigen Korrekturwertnäherungsverlauf zeigen, während Fig. 2 einen entsprechenden Sensor oder eine entsprechende Sensoranordnung als Blockschaltbild zeigt. Zunächst wird jedoch anhand der Fig. 1a und 1b ein Ausführungsbeispiel eines erfindungsgemäßen Verfahrens erläutert.

Das als Flussdiagramm in Fig. 1a dargestellte Ausführungsbeispiel eines Verfahrens zur abschnittsweisen Bestimmung eines parameterabhängigen Korrekturwertnäherungsverlaufs basiert darauf, dass bezüglich eines Anfangsparameterwertes $p_0$, der im Allgemeinen in einem ersten Parameterbereich 215-1 liegt, ein Anfangskorrekturwert AW und ein erster Parameterkoeffizient pK1 vorgegeben sind, also beispielsweise im Rahmen eines Serientests vermessen und in dem Sensor abgespeichert wurden. Auf Basis des ersten Parameterkoeffizienten pK1 und des Anfangskorrekturwertes AW ist so ein erster Teilabschnitt 240-1 des abschnittsweisen Korrekturwertnäherungsverlaufs 240 gegeben.

Fig. 1b illustriert dies anhand einer entsprechenden Auftragung des Korrekturwertes und des auf dem Ausführungsbeispiel beruhenden Korrekturwertnäherungsverlaufs in Abhängigkeit des Parameters p. So zeigt Fig. 1b einen, während des Messbetriebs normalerweise nicht mehr zugänglichen Korrekturwertverlauf 200, der bei dem Anfangsparameterwert $p_0$ den Anfangskorrekturwert AW (absoluter Wert) annimmt.

Der Anfangsparameterwert $p_0$ liegt hierbei in dem ersten Parameterbereich 215-1, der sich hinsichtlich der Parameterwerte p bei der in Fig. 1b schematisch gezeigten Situation in dem Parameterintervall zwischen $p_0 - \Delta p$ und $p_0 + \Delta p$ erstreckt.

An den ersten Parameterbereich 215-1, über dem der erste Teilabschnitt 240-1 des Korrekturwertnäherungsverlaufs 240 definiert ist, grenzt bei der in Fig. 1b gezeigten Situation ein zweiter Parameterbereich 215-2 an, über den ein zweiter Teilabschnitt 240-2 des Korrekturwertnäherungsverlaufs 240 durch das Ausführungsbeispiel der vorliegenden Erfindung zu ermitteln ist.

Bei dem hier beschriebenen Beispiel der vorliegenden Erfindung sind der erste und der zweite Parameterbereich 215-1, 215-2 aneinander angrenzend, so dass gegebenenfalls unter Berücksichtigung einer Messauflösung bezüglich der Parameterwerte, einer Quantisierungsauflösung oder einer anderen dem betreffenden Sensor innewohnenden Auflösungsgrenze keine Parameterwerte zwischen dem ersten und dem zweiten Parameterbereich 215-1, 215-2 liegen.

Wird nun nach einem Start des Verfahrens (Schritt S100) im Rahmen eines Schritts S110 festgestellt, dass ein erster Parameterwert $p_1$, der der Sensoranordnung zugeordnet ist, eine vorbestimmte Bedingung erfüllt oder eine Auslösebedingung erfüllt ist, so wird im Rahmen eines Schritts S120 ein erster Messsignalwert MW1 bei dem ersten Parameterwert $p_1$ bestimmt. Anschließend wird im Rahmen eines Schritts S130 der dem Sensor zugeordnete erste Parameterwert $p_1$ so geändert, dass ein zweiter Parameterwert $p_2$ erhalten wird. Im Rahmen eines Schritts S140 wird nun bei dem zweiten Parameterwert $p_2$ ein zweiter Messsignalwert MW2 bestimmt, woraufhin im Rahmen eines Schritts S150 ein zweiter Teilabschnitt 240-2 des Korrekturwertnäherungsverlaufs 240 auf Basis eines den zweiten Teilabschnitt 240-2 beschreibenden funktionalen Zusammenhangs unter Berücksichtigung des ersten und des zweiten Parameterwerts $p_1$ und $p_2$, des ersten und des zweiten Messsignalwerts MW1 und MW2 und des Anfangskorrekturwerts AW ermittelt, bevor das Verfahren in Schritt S160 endet. Wird hingegen im Rahmen des Schritts S110 festgestellt, dass der erste Parameterwert die vorbestimmte Bedingung nicht erfüllt und auch die Auslösebedingung nicht erfüllt ist, so wird direkt zu Schritt S160 verzweigt.

Mit Hilfe der bei den Parameterwerten $p_1$ (erster Parameterwert) und $p_2$ (zweiter Parameterwert) bestimmten Messsignalwerten MW1 (erster Messsignalwert) und MW2 (zweiter Messsignalwert) kann so auf Basis der Beziehung

$$pK2 = \frac{MW1 - MW2}{p_1 - p_2} \qquad (1)$$

ein Parameterkoeffizient pK2 in dem zweiten Parameterbereich 215-2, in dem zumindest der Parameterwert $p_1$ liegt, ermittelt werden. Auf Basis dieses Parameterkoeffizienten pK2 kann dann eine Beschreibung des zweiten Teilabschnitts 240-2 des Korrekturwertnäherungsverlaufs 240 erfolgen, die bei der in Fig. 1b gezeigten Situation sich stetig an den ersten Teilabschnitt 240-1 des Korrekturwertnäherungsverlaufs 240 anschließt.

Bei der in Fig. 1b gezeigten Situation sind also im Falle der beiden angrenzenden Parameterbereiche 215-1, 215-2 der erste und der zweite Teilabschnitt 240-1, 240-2 des Korrekturnäherungsverlaufs 240 zueinander stetig, wobei wiederum gegebenenfalls die bereits zuvor genannten Auflösungsgrenzen hinsichtlich der Messwerte oder Messsignale zu berücksichtigen sind. Wie später noch erläutert wird, kann darüber hinaus der abschnittsweise bestimmte, parameterabhängige Korrekturnäherungsverlauf 240 einen oder mehrere weitere oder zusätzliche Teilabschnitte bezüglich eines oder mehrerer zusätzlicher Parameterbereiche aufweisen. Fig. 2 zeigt ein Ausführungsbeispiel der vorliegenden Erfindung in Form eines Sensors 100. Der Sensor 100 umfasst ein erstes Sensorelement 110 zum Bereitstellen von Messsignalen, die entsprechenden Messwerten entsprechen. Das erste Sensorelement 110 ist hierbei mit einer Verarbeitungsschaltung 120 gekoppelt, die ausgebildet ist, um die entsprechenden Messsignale zu erfassen. Darüber hinaus ist die Verarbeitungsschaltung 120 mit einem zweiten Sensorelement zum Bereitstellen von Parametersignalen gekoppelt, die Parameterwerten entsprechen.

Die Verarbeitungsschaltung 120 ist ferner ausgebildet, um basierend auf den Messsignalen, den darin umfassten Messwerten, den Parametersignalen und den darin umfassten Parameterwerten das zuvor beschriebene Verfahren zur abschnittsweisen Bestimmung eines parameterabhängigen Korrekturwertnäherungsverlaufs durchzuführen. Je nach konkreter Implementierung umfasst der Sensor 100 ferner eine Parameterwertänderungseinrichtung 140 als optionale Komponente (gestrichelt gezeichnet in Fig. 2), die in der Lage ist, den Parameterwerte des ersten Sensorelements 110, das zur eigentlichen Messwerterfassung verwendet wird, zu ändern. Die entsprechende Parameteränderung bzw. überhaupt die Bestimmung des Parameterwerts des Sensors 100 (bzw. des ersten Sensorelements 110) erfolgt über das zweite Sensorelement 130, das zu diesem Zweck bei Ausführungsbeispielen der vorliegenden Erfindung möglichst nahe an dem ersten Sensorelement 110, idealerweise unmittelbar benachbart, räumlich angeordnet ist. Um gegebenenfalls auch eine möglichst lokal beschränkte Änderung des Parameterwerts hervorzurufen, gilt ähnliches ebenfalls für die optionale Parameteränderungseinrichtung 140, sofern diese implementiert ist.

Sollte eine entsprechende Implementierung einer Parameteränderungseinrichtung 140 nicht notwendig sein, kann die Verarbeitungsschaltung 120 beispielsweise auch durch eine Änderung einer Versorgungsleistung, beispielsweise einer Erhöhung oder einer Erniedrigung derselben, eine entsprechende Parameteränderung des ersten Sensorelements 110 mittelbar oder indirekt bewirken.

Ausführungsbeispielen der vorliegenden Erfindung liegt somit der Grundgedanke zugrunde, dass eine Verbesserung der Messergebnisse eines Sensors 100 bei einer gleichzeitigen Vereinfachung des Herstellungsverfahrens bzw. des Kalibrationsverfahrens des Sensors 100 dadurch erzielt werden kann, dass die aufwändigen Serientests zur Bestimmung absoluter Korrekturwerte auf einen einzigen Anfangskorrekturwert bei einem Anfangsparameterwert beschränkt werden können. Hierzu wird bezüglich wenigstens eines ersten und eines zweiten Parameterbereichs ein Korrekturwertnäherungsverlauf abschnittsweise mit zumindest einem ersten Teilabschnitt und einem zweiten Teilabschnitt ermittelt bzw. bestimmt, wobei der erste Teilabschnitt auf dem vorbestimmten Anfangskorrekturwert und einem ebenfalls vorbestimmten ersten Parameterkoeffizienten basiert. Für den zweiten Parameterbereich und dem zugehörigen zweiten Teilabschnitt des Korrekturwertnäherungsverlaufs, der sich bezüglich der Parameterwerte beispielsweise an den ersten Parameterbereich des ersten Teilabschnitts anschließen bzw. an diesen angrenzen kann, kann durch Bestimmung eines ersten Messsignalwerts bei einem ersten Parameterwert und eines zweiten Messsignalwerts bei einem zweiten Parameterwert der zweite Teilabschnitt ermittelt werden. Hierbei geht der zweite Parameterwert aus dem ersten Parameterwert durch eine Änderung des betreffenden Parameterwerts hervor. Da, wie zuvor erläutert wurde, ein substantieller Unterschied zwischen Korrekturwerten und Korrekturwertnäherungen einerseits und Messwerten und Messsignalwerten andererseits besteht, wird der zweite Teilabschnitt mittelbar oder unmittelbar basierend auf dem vorbestimmten Anfangskorrekturwert ermittelt.

Hierdurch ergibt sich der Vorteil, dass bei Ausführungsbeispielen der vorliegenden Erfindung sowohl ein vereinfachtes, werksseitiges Kalibrierverfahren zur Bestimmung des Anfangskorrekturwertes und des ersten Parameterkoeffizienten durchgeführt werden kann, wobei im Vergleich zu einem Korrekturwertnäherungsverlauf, der nur auf diesen beiden im Rahmen des Kalibrationstests bestimmten Werten beruht, eine signifikant verbesserte Messgenauigkeit erzielt werden kann. Darüber hinaus ermöglichen Ausführungsbeispiele der vorliegenden Erfindung eine verbesserte Kompensation bezüglich großer Parameterbereiche, wie sie beispielsweise im Automobilbereich, im Schiffs-Bereich, im Flugzeug-Bereich und bei vielen anderen technischen Anwendungen im Hinblick auf Sensoren auftreten. So kann mit Hilfe eines Ausführungsbeispiels der vorliegenden Erfindung in Form eines Verfahrens zur abschnittsweisen Bestimmung eines parameterabhängigen Korrekturwertnäherungsverlaufs und den zugehörigen Sensoren die Messgenauigkeit auch in Bereichen bezüglich der Betriebsparameter signifikant verbessert werden, die nur im Rahmen einer Extrapolation zugänglich sind.

Anders ausgedrückt ermöglichen es Ausführungsbeispiele der vorliegenden Erfindung, Sensoren in einem Betriebsparameterbereich einzusetzen, für den im Rahmen des Serientests bzw. der entsprechenden Kalibrierungs- und Testmessungen keine Anfangskorrekturwerte und Parameterkoeffizienten bestimmt werden. Ein weiterer Vorteil von Ausführungsbeispielen der vorliegenden Erfindung besteht darin, dass eine Kompensation von Alterungseffekten, wie sie bei Sensoren auftreten können, dadurch kompensiert werden können, indem regelmäßig, beispielsweise nach Verstreichen einer bestimmten Zeitspanne, auf einen entsprechenden CPU-Befehl (CPU = central processing unit = Zentralprozessor) oder einen anderen prozessor-basierten Befehl hin, bei einem Einschalten des Sensors eine entsprechende Bestimmung eines abschnittsweisen, parameterabhängigen Korrekturwertnäherungsverlaufs durchgeführt werden kann. Die so ermittelten Parameterkoeffizienten bzw. die auf diese Art und Weise bestimmten Teilabschnitte des Korrekturwertnäherungsverlaufs können so zur weiteren Verwendung in einem Speicher abgelegt werden. Somit ermöglichen Ausführungsbeispiele der vorliegenden Erfindung eine gegebenenfalls regelmäßig durchgeführte Überprüfung und optionale Korrektur der Korrekturwertnäherungsverläufe bzw. ihrer Teilabschnitte.

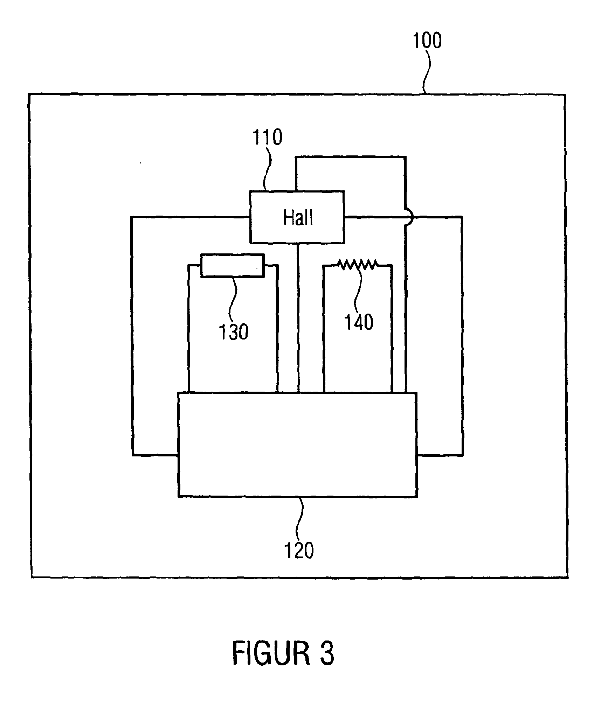

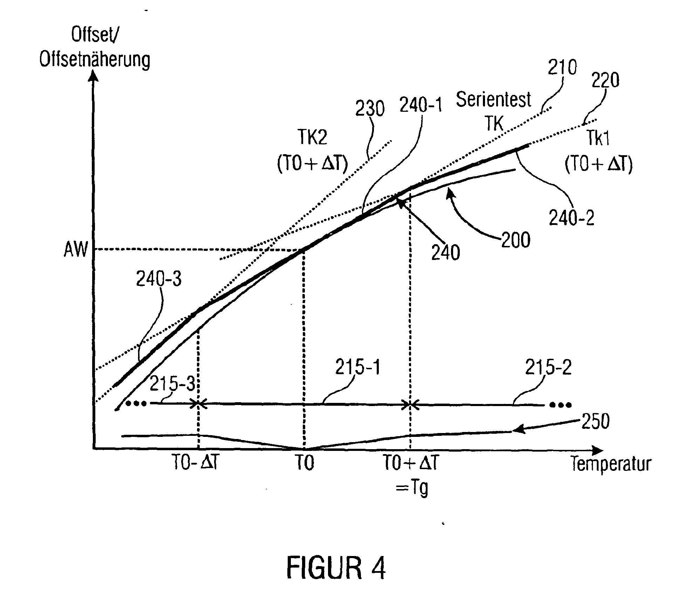

Auch wenn im Rahmen der nun folgenden Fig. 3 und 4 Ausführungsbeispiele der vorliegenden Erfindung im Falle von Hall-Sensoren bzw. Hall-Sensoranordnungen beispielhaft beschrieben werden, handelt es sich hierbei jedoch lediglich um ein, nicht einschränkend zu verstehendes, Ausführungsbeispiel der vorliegenden Erfindung. Bei dem in den folgenden Fig. 3 und 4 gezeigten Ausführungsbeispielen handelt es sich um einen Magnetfeldsensor, bei dem als Parameterwert die Temperatur bzw. Temperaturwerte im Rahmen einer Offset-Kompensation als Korrekturwertnäherung verwendet werden. Selbstverständlich sind Ausführungsbeispiele der vorliegenden Erfindung nicht auf Hall-Sensoren und die Temperaturabhängigkeit ihrer Offsetwerte beschränkt, sondern können auf eine Vielzahl anderer Sensoren und entsprechender Parameter angewendet werden.

Hall-Sensoren können so beispielsweise einen meist großen und zudem stark temperaturabhängigen Offset besitzen. Ein solcher Offset kann zwar grundsätzlich mit Hilfe des so genannten Spinning-Current-Prinzips (SC) verringert werden, jedoch bleibt häufig eine Temperaturabhängigkeit des Spinning-Current-Offsets weiter bestehen. Das Spinning-Current-Prinzip besteht darin, die Messrichtung zur Erfassung der Hall-Spannung an dem Hall-Sensorelement des Sensors ständig mit einer bestimmten Taktfrequenz zyklisch (um beispielsweise 90°) weiterzudrehen und über alle Messsignale einer vollen Drehung um 360° aufzusummieren.

Fig. 3 zeigt so ein Blockschaltdiagramm eines Hall-Sensors 100 mit einem Hall-Sensorelement als erstem Sensorelement 110. Das Hall-Sensorelement 110 ist bei dem in Fig. 3 gezeigten Ausführungsbeispiel der vorliegenden Erfindung beispielhaft über vier jeweils um 90° versetzter Anschlüsse an eine Verarbeitungsschaltung 120 zur Ansteuerung und zum Auswerten der Sensorsignale des Hall-Sensorelements 110 gekoppelt. Hierbei wird im Rahmen der vorliegenden Erfindung unter zwei Komponenten, die miteinander gekoppelt sind, solche verstanden, die direkt oder indirekt, über eine weitere Komponente (z. B. ein Widerstand, Verstärker) miteinander verbunden sind.

Der Hall-Sensor 100 weist ferner ein Temperatursensorelement 130 als zweites Sensorelement auf, bei dem es sich bei dem in Fig. 3 gezeigten Ausführungsbeispiel um ein Widerstandselement handelt. Je nach konkreter Implementierung kann es sich bei dem Temperatursensorelement um einen PTC-Widerstandselement (PTC = positive temperature coefficient = positiver Temperaturkoeffizient), um ein NTC-Widerstandselement (NTC = negative temperature coefficient = negativer Temperaturkoeffizient) oder um ein anderes entsprechendes Widerstandselement, beispielsweise auf Basis einer Halbleiterverbindung, handeln. Als Parameteränderungseinrichtung 140 weist der Hall-Sensor 100 darüber hinaus ein Heizelement 140 als schaltbare Wärmequelle auf. Ein solches Heizelement kann beispielsweise als ein Widerstandselement mit einem entsprechenden elektrischen Widerstandswert ausgeführt sein.

Ausführungsbeispiele der vorliegenden Erfindung zeichnen sich also dadurch aus, dass ein Offset-Temperaturkoeffizient TK (Parameterkoeffizient) und ein Absolutwert AW des Offsets (Anfangskorrekturwert) nur bei einer Temperatur T0 (Anfangsparameterwert) On-Chip im Rahmen des Serientests mit Hilfe des Temperatursensorelements 130 ermittelt werden. Zusätzliche Messungen bei verschiedenen Temperaturen während des Serientests werden nicht mehr benötigt und können gegebenenfalls daher eingespart werden. Ausgehend von dieser ersten Testmessung im Rahmen der Serientest-Kalibrierung erfolgt die Kalibrierung über den kompletten Betriebstemperaturbereich erst im laufenden Betrieb des Sensors 100.

Hierbei wird die folgende, bereits beschriebene Funktionsweise angewendet. Ausgehend von den bekannten Werten AW und TK des Offsets arbeitet der Sensor 100 in der Nähe der Serientest-Temperatur quasi offsetfrei. Mit Hilfe des Temperatursensorelements 130 kann die Betriebstemperatur während des laufenden Betriebs durch die Verarbeitungsschaltung 120 überwacht werden. Ändert sie sich um einen bestimmten Betrag $\Delta T$, so wird ein weiterer Offset-Temperaturkoeffizient, der zweite Parameterkoeffizient, On-Chip ermittelt. Auf diese Art und Weise kann prinzipiell über beliebig viele Geraden oder andere funktionale Zusammenhänge der Offsetverlauf über der Temperatur nachgebildet bzw. aproximiert werden.

Fig. 4 zeigt schematisch einen Vergleich eines Offsetverlaufs (Korrekturwertverlauf) eines Sensors 100 und eines mit drei Geraden nachgebildeten Offsetverlaufs als abschnittsweise bestimmter Korrekturwertnäherungsverlauf. Genauer gesagt zeigt Fig. 4 eine Auftragung von Korrekturwerten und Korrekturwertnäherungen in Abhängigkeit einer Temperatur T. Hierbei stellt ein in Fig. 4 gezeigter Verlauf 200 den tatsächlichen, im laufenden Betrieb normalerweise nicht mehr zugänglichen Offsetverlauf des Hall-Sensors 100 dar. Neben diesem realen Offsetverlauf des Hall-Sensors 100 ist in Fig. 4 ferner eine erste Näherungsgerade 210 eingezeichnet, deren Verlauf durch den Absolutwert AW und den Temperaturkoeffizienten TK im Rahmen des Serientests bei der Temperatur T0 bestimmt wurden. Die Näherungsgerade 210 stellt somit in einem ersten Temperaturbereich 215-1 den ersten Teilabschnitt 240-1 des Näherungskorrekturwertverlaufs 240 dar. Aufbauend auf diesem Startpunkt mit dem bekannten bzw. vorbestimmten Absolutwert AW und dem Temperaturkoeffizienten TK können nun bei verschiedenen Temperaturen weitere Temperaturkoeffizienten TK2, TK3, ... bestimmt werden, um so den Offsetverlauf 200 nachzubilden oder zu approximieren.

Überschreitet so die Temperatur beispielsweise eine Grenztemperatur $T_g$ = T0 + $\Delta T$ und verlässt somit den ersten Temperaturbereich 215-1, kann im Rahmen des zuvor beschriebenen Verfahrens zunächst bei einem entsprechenden Temperaturwert T1 (erster Parameterwert) ein erster Messsignalwert MW1 des Hall-Sensors 100 bestimmt werden. Anschließend kann durch Ansteuern des Heizelements 140 die Temperatur um einen weiteren, beispielsweise gegenüber dem Temperaturwert $\Delta T$ kleinen Wert erhöht werden, um bei diesem als zweiten Parameterwert dienenden Temperaturwert T2 einen zweiten (Mess-)Signalwert MW2 zu erfassen. Mit dem ersten Messwert MW1 bei der Temperatur T1 und dem Messwert MW2 bei der Temperatur T2, ergibt sich so ein zweiter Temperaturkoeffizient in einen zweiten Temperaturbereich 215-2 bei Temperaturen größer als (T0 + $\Delta T$) gemäß

$$TK1 = \frac{\Delta MW}{\Delta TEMP} = \frac{MW1 - MW2}{T1 - T2} \qquad (2)$$

als Steigung einer entsprechenden Näherungsgeraden als Teilabschnitt 240-2 des Korrekturwertnäherungsverlaufs 240.

Somit kann auf Basis des zweiten Temperaturkoeffizienten TK2 ein zweite Teilabschnitt 240-2 des Korrekturwertnäherungsverlaufs bestimmt werden, indem beispielsweise bei der Temperatur $T_g$ = (T0 + $\Delta T$) die Näherungsgerade 210 und eine zweite Näherungsgerade 220 stetig aneinander fortgesetzt werden, wie dies Fig. 4 ebenfalls illustriert. Durch ein analoges Vorgehen in einem dritten Temperaturbereich 215-3 (dritter Parameterbereich oder weiterer Parameterbereich) bei Temperaturen T unterhalb der Temperatur T0 - $\Delta T$, kann so ein dritter Teilabschnitt 240-3 des ab-

schnittsweise bestimmten Korrekturwertnäherungsverlaufs 240 ermittelt oder bestimmt werden, der in Fig. 4 als dritte Näherungsgerade 230 eingezeichnet ist. Hierbei stellt der Temperaturbereich zwischen den Temperaturen T0 - ΔT und T0 + ΔT den ersten Temperaturbereich oder den ersten Parameterbereich dar, während die Temperaturbereiche unterhalb des erst genannten Temperaturwerts bzw. der Temperaturbereich oberhalb des zweit genannten Temperaturwerts den zweiten bzw. dritten Temperaturbereich darstellen, über den der Offset des Hall-Sensors 100 nachgebildet ist. In Fig. 4 ist diese Offsetnachbildung mittels dreier Geraden als abschnittsweiser Korrekturwertnäherungsverlauf 240 fett hervorgehoben.

Darüber hinaus ist in Fig. 4 ebenfalls ein Verlauf 250 eines Rest-Offsets nach einer Kalibrierung über das zuvor beschriebene Verfahren auf Basis der Offsetnachbildung 240 eingetragen, die die erzielte Verbesserung in den Temperaturbereichen oberhalb der Temperatur T0 + ΔT und unterhalb der Temperatur T0 - ΔT illustriert. So knicken in diesen beiden Bereichen der Rest-Offsetverlauf 250 im Vergleich zu dem Verlauf innerhalb des ersten Temperaturbereichs zwischen T0 - ΔT und T0 + ΔT deutlich ab, was die Verbesserung der Genauigkeit des Sensor 100 illustriert.

Grundlage dieser On-Chip-Kalibrierung der Temperaturkoeffizienten TK, hier des Temperaturkoeffizienten TK1, ist also die schaltbare Wärmequelle 140. Mit ihr kann der Hall-Sensor im laufenden Betrieb erwärmt werden. Mit bekannter Temperaturdifferenz ΔTEMP und einer bekannten Messwertdifferenz ΔMW kann so der Temperaturkoeffizient bestimmt werden.

Ein wesentlicher Vorteil, wie er bereits angesprochen wurde, stellt die Tatsache dar, das nur bei dem im Zusammenhang mit Fig. 4 beschriebenen Ausführungsbeispiel der vorliegenden Erfindung der Absolutwert AW im feldfreien Raum gemessen werten muss. Die Temperaturkoeffizienten TK, TK1, TK2 können im Unterschied zu dem Absolutwert AW auch bei anliegendem Magnetfeld gemessen werden, da diese von dem jeweils aktuellen Messwert in guter Näherung unabhängig sind. Je nach konkreter Implementierung und Anwendung eines Hall-Sensors 100 kann es hierbei ratsam sein, dass der Sensor 100 während der Änderung der Temperatur durch das Heizelement 140 einem konstanten Magnetfeld oder einem zumindest sich im Mittel nicht ändernden Magnetfeldes ausgesetzt wird. So kann beispielsweise im Falle eines sich periodisch um einen konstanten Magnetfeldwert sich ändernden Magnetfeldes eine Integration über eine Periode eines solchen sich ändernden Magnetfeldes ebenfalls zur Grundlage der Bestimmung des ersten und des zweiten Messsignalwerts gemacht werden.

Wie bereits das in Fig. 4 gezeigte Ausführungsbeispiel illustriert hat, können selbstverständlich mehr als zwei Temperaturbereiche oder Parameterbereiche mit zugehörigen Teilabschnitten zur Nachbildung des Korrekturwertverlaufs herangezogen werden. Grundsätzlich gilt, dass, je mehr Temperaturkoeffizienten TK gemessen bzw. bestimmt werden, desto genauer die Nachbildung und umso niedriger ein gegebenenfalls auftretender Rest-Offset ist.

Die im Zusammenhang mit den Fig. 3 und 4 beschriebenen Ausführungsbeispiele der vorliegenden Erfindung stellen also eine automatische Kalibrierung des temperaturabhängigen Offsets bei Hall-Sensoren 100 mit Hilfe einer On-Chip-Bestimmung der zugehörigen Temperaturkoeffizienten TK dar. Neben der Verwendung eines Heizelements 140, wie dies im Rahmen des in Fig. 3 gezeigten Ausführungsbeispiels der vorliegenden Erfindung der Fall war, kann als schaltbare Wärmequelle auch jeder andere beliebige Schaltungsteil, also auch das erste Sensorelement 110 bzw. der Hall-Sensor 110 selbst verwendet werden. Je höher beispielsweise die Verlustleistung in dem Hall-Sensorelement 110 ist, desto schneller wird der betreffende Hall-Sensor erhitzt. Entsprechend schneller können eine oder mehrere Temperaturkoeffizienten bestimmt werden. Grundsätzlich besteht aber auch die Möglichkeit, beispielsweise durch das Abschalten von Schaltungsteilen die Temperatur des Hall-Sensorelements im Vergleich zu einem Temperaturwert während des normalen Betriebs (Normalbetriebsmodus oder -zustand) zu erniedrigen. In einem solchen Fall muss im Hinblick auf die Verwendung der Gleichung (2) bzw. bei der Bestimmung der Temperaturkoeffizienten darauf geachtet werden, dass in diesem Fall das entsprechende Vorzeichen der Temperaturänderung berücksichtigt wird. Es muss also in diesem Fall darauf geachtet werden, dass eine negative Temperaturänderung vorliegt. Neben der Verwendung von Heizelementen, also etwa elektrischen Widerständen oder anderen schaltbaren Wärmequellen, kann so auch durch eine Erhöhung oder eine Reduzierung der Leistung des Sensors, der Sensoranordnung, der Sensorelemente oder anderer Teile der Schaltung eine Temperaturänderung hervorgerufen werden. Selbstverständlich können auch gezielt Kühlelemente, wie etwa ein Peltier-Element zum Einsatz kommen.

Wie bereits zuvor erläutert, können auch andere Parameter als die Temperatur im Rahmen einer Messwertkorrektur bzw. im Rahmen einer abschnittsweisen Bestimmung eines parameterabhängigen Korrekturwertnäherungsverlaufs herangezogen werden. Neben der Temperatur zählen so beispielsweise der Druck, mechanische Verformungen oder andere umgebungsabhängige oder betriebsabhängige Parameter. Beispiele hierfür stellen elektrische Spannungen, elektrische Ströme, aber auch chemische Umgebungsparameter (z. B. Sauerstoffgehalt der Umgebung) dar.

Sofern einer oder mehrerer der vorgenannten Parameter einen Einfluss auf den Sensor, die Sensoranordnung oder das betreffende Sensorelement selber aufweist, dieser durch ein entsprechendes Sensorelement 120 bestimmbar und gegebenenfalls direkt aber auch indirekt oder mittelbar über einen anderen Parameter beeinflussbar ist, kann so mit Hilfe von Ausführungsbeispielen der vorliegenden Erfindung eine entsprechende abschnittsweise Bestimmung eines parameterabhängigen Korrekturwertnäherungsverlaufs durchgeführt werden. Im Falle des Drucks oder eines anderen mechanischen Einflusses auf den Sensor, die Sensoranordnung oder das Sensorelement selbst kann so beispielsweise ein Piezoelement als Parameteränderungseinrichtung 140 eingesetzt werden.

Neben der im Rahmen von Fig. 4 beschriebenen Verwendung von Näherungsgeraden können auch andere funktionale Zusammenhänge zur formalen Beschreibung von Parameterabhängigkeiten des Korrekturwertnäherungsverlaufs eingesetzt werden. Da, wie zuvor erläutert wurde, die absoluten Korrekturwerte im Allgemeinen nicht zugänglich sind, ist es jedoch möglich, mit Hilfe von Parameterkoeffizienten und anderen aus Teilabschnitten bestimmten Korrekturwertnäherungen mathematische Funktionen bzw. funktionale Zusammenhänge zu ermitteln, die den realen, nicht erzielbaren Korrekturwertverlauf nachbilden. Auch entsprechende Formeln und mathematische Zusammenhänge können im Rahmen von Teilabschnitten des Korrekturwertnäherungsverlaufs verwendet werden. Mit Hilfe der beiden Pa-rameterwerte $p_1$ (erster Parameterwert) und $p_2$ (zweiter Parameterwert) bestimmten Messsignalwerten MW1 (erster Messsignalwert) und MW2 (zweiter Messsignalwert) kann so auf Basis von Gleichung (1) ein Parameterkoeffizient pK in dem betreffenden Parameterbereich 215, in dem zumindest der Parameterwert $p_1$ liegt, ermittelt werden. Auf Basis dieser Parameterkoeffizienten pK kann dann eine Beschreibung der Teilabschnitte des Korrekturwertnäherungsverlaufs mittel polynomialer Funktionen, rationaler Funktionen (Quotient zweier polynomialer Ausdrücke), exponentieller Funktionen, hyperbolischer Funktionen, harmonischer Funktionen oder beliebiger Kombinationen entsprechender Funktionen erfolgen.

Im Fall eines polynomialen Ausdrucks vom Grad N, wobei N eine positive, ganze Zahl ist, wird dies näher erläutert. Polynomiale Ausdrücke basieren auf einem Ausdruck gemäß

$$f(p) \;=\; \sum_{k=0}^{N} a_k \cdot p^k \quad , \qquad\qquad (3)$$

wobei p ein Parameterwert, f(p) ein Wert des polynomialen Ausdrucks beim Parameterwert p, $a_k$ ein reellwertiger Ko-effizient und k eine ganze Zahl im Bereich zwischen 0 und N ist. Im Falle einer Beschreibung der Teilabschnitte als Geraden (N = 1) sind so zwei Parameter ($a_0$, $a_1$) für jeden der Teilabschnitte festzulegen. Folglich sind im Falle von Geraden jeweils zwei Bedingungen an den betreffenden Verlauf des Teilabschnitts zu stellen. Im Falle von Parabeln (N = 2) sind entsprechend drei Parameter mit folglich drei Bedingungen zu stellen. Allgemein gesprochen sind im Falle polynomiale Ausdrücke vom Grad N an jeden der Teilabschnitte (N + 1) Bedingungen zu stellen, da ebenso viele Parameter für jeden der Teilabschnitte zu bestimmten ist. Hierbei kann in jedem Parameterbereich wenigstens eine Bedingung durch den Parameterkoeffizienten gemäß Gleichung (1) erfüllt werden. In Abhängigkeit der Zahl der weiteren zu bestimmenden Koeffizienten der polynomialen Ausdrücke sind entsprechend weitere Bedingungen, etwa an die Stetigkeit der einzelnen Teilabschnitte zueinander, eine Differenzierbarkeit der einzelnen Teilabschnitte jeweils an den Grenzen der den Teilabschnitten zugrunde liegenden Parameterbereiche und/oder oder bezüglich des Anfangskorrekturwerts als absolutem Wert für die polynomiale Verläufe zu stellen. Auch ist es möglich, bezüglich höherer Ableitungen der betreffenden Polynome oder funktionalen Zusammenhänge Stetigkeit oder Differenzierbarkeit als (weitere) Randbedingungen zu fordern.

Hierbei werden im Rahmen der vorliegenden Beschreibung stetig und differenzierbar im mathematischen Sinne aufgefasst, wobei entsprechende Sprünge, die auf Rauschen, Quantisierungseffekte oder andere, die Auflösung begrenzende Effekte zurückzuführen sind, als solche nicht berücksichtigt werden. Anders ausgedrückt bedeutet dies, dass ein abschnittsweise bestimmter, parameterabhängiger Korrekturwertnäherungsverlauf bzw. auch innerhalb der einzelnen Parameterbereiche die Teilabschnitte desselben stetig sind, wenn für alle Parameter des betreffenden Parameterbereichs oder der Parameterbereiche zu jedem Korrekturwertnäherungswert für alle (mathematisch definierten) Intervalle um diesen Wert herum ein weiteres (mathematisch definiertes) Intervall existiert, das den zugehörigen Parameterwert umfasst, so dass für alle Parameterwerte innerhalb dieses weiteren Intervalls die zugehörigen Korrekturwertnäherungswerte innerhalb des ersten Intervalls liegen. Hierbei kann die zuvor erläuterte Beschränkung hinsichtlich Rauschens, Auflösung oder Quantisierung dazu führen, dass die betreffenden Intervalle hinsichtlich ihrer Größe zu kleinen Werten oder zu großen Werten beschränkt sein können. In völliger Analogie wird im Rahmen der vorliegenden Beschreibung unter Differenzierbarkeit die Stetigkeit einer (mathematisch definierten) Ableitung des Korrekturwertnäherungsverlaufs bzw. seiner Teilabschnitte verstanden. Ist eine solche mathematisch definierte Ableitung nicht sinnvoll definierbar, wird im Rahmen der vorliegenden Beschreibung der Begriff der Differenzierbarkeit auf entsprechende Differenzkurven ausgeweitet, bei der Differenzen bezüglich der Parameterwerte benachbarter Parameter- und Korrekturwertnäherungswerte betrachtet werden. Auch hier gelten die zuvor erläuterten Bemerkungen bezüglich Rauschens, Auflösung und Quantisierung.

Im Falle des in Fig. 4 gezeigten Ausführungsbeispiels unter Berücksichtung von Graden (Grad des Polynoms N = 1) kann so beispielsweise der erste Teilabschnitt des Korrekturwertnäherungsverlaufs durch eine Gleichung

$$f_1(p) = pk_1 \cdot (p - p_0) + f_0 \qquad (4)$$

beschrieben werden, wobei im Unterschied zu dem in Fig. 4 gezeigten Ausführungsbeispiel nicht mehr von einer Temperatur T sondern von einem Parameter p ausgegangen wird. Hierbei ist $f_1(p)$ ein Wert des ersten Teilabschnitts bei einem Parameterwert p, $pk_1$ der erste Parameterkoeffizient und $p_0$ der Anfangsparameterwert, bei dem der Anfangskorrekturwert $f_0$ im Rahmen der Kalibrationsmessungen bzw. Testmessungen im Serientest für den betreffenden Sensor 100 bestimmt wurde. Übersteigt nun der Parameterwert p eine Grenze bezüglich der Parameterwerte $p_g$ und wechselt somit in einen zweiten Parameterbereich, über den ein zweiter Teilabschnitt des Korrekturwertnäherungsverlaufs definiert ist oder werden soll, ergibt sich aufgrund der zuvor erörterten Bedingung der zwei für einen gerade zu bestimmenden Parameter die Notwendigkeit, zwei Randbedingungen an den Korrekturwertnäherungsverlauf zu definieren und die betreffenden Parameter entsprechend zu bestimmen. Im Falle zweier direkt benachbarter Parameterbereiche mit dem Parametergrenzwert $p_g$ kann ein Koeffizient der allgemeinen Gradenformel nach Gleichung (3) (mit N = 1) auf Basis der Steigung bzw. des Parameterkoeffizienten gemäß einer entsprechenden Anwendung von Gleichung (1) durch zwei Messwerte MW1, MW2 bei den Parameterwerten $p_1$, $p_2$ bestimmt werden. Als zweite Randbedingung an die Koeffizienten der Geraden kann darüber hinaus die Stetigkeit des gesamten Korrekturwertnäherungsverlaufs gefordert werden. Aufgrund der polynomialen Beschreibung der einzelnen Teilabschnitte ist diese Forderung selbstverständlich innerhalb der einzelnen Parameterbereiche erfüllt. Somit kann der zweite Koeffizient der Geraden auf Basis der Stetigkeitsforderung an dem Grenzparameterwert pg zwischen den beiden Teilabschnitten des Korrekturwertnäherungsverlaufs bestimmt werden. Es ergibt sich so für den zweiten Teilabschnitt

$$f_2(p) = pk_2 \cdot (p - p_g) + pk_1 \cdot (p_g - p_o) + f_o, \qquad (5)$$

wobei $pk_2$ der gemäß Gleichung (1) bestimmte zweite Parameterkoeffizient für den zweiten Parameterbereich ist und $f_2(p)$ einen Wert des zweiten Teilabschnitts für den Parameterwert p in dem den zweiten Teilabschnitt zugrunde liegenden zweiten Parameterbereich ist.

Alternativ hätte selbstverständlich auch in anderen Ausführungsbeispielen der vorliegenden Erfindung eine andere zweite Bedingung an die Koeffizienten der Geraden gestellt werden können. So hätte beispielsweise auch die Forderung bestehen können, dass die den zweiten Teilabschnitt beschreibende Gerade extrapoliert ebenfalls durch den Anfangskorrekturwert $f_0$ bei dem Anfangsparmaterwert $p_0$ hätte verlaufen sollen. In diesem Fall hätte sich anstelle von Gleichung (5) eine im Wesentlichen der Gleichung (4) entsprechende Gleichung ergeben, bei der anstelle von $f_1(p)$ der Wert des zweiten Teilabschnitts $f_2(p)$ und anstelle des ersten Parameterkoeffizienten $pk_1$ der zweite Parameterkoeffizienten $pk_2$ zu verwenden gewesen wäre.

Auf diese Art und Weise ist es möglich, nicht nur zwei Teilabschnitte des abschnittsweise bestimmten, parameterabhängigen Korrekturwertnäherungsverlaufs zu definieren. Es ist vielmehr möglich, wie dies auch Fig. 4 bereits angedeutet hat, viele Parameterbereiche mit zugrunde liegenden Teilabschnitten einzuführen. Je nach verwendeten funktionalen Zusammenhängen, die den einzelnen Teilabschnitten zugrunde liegen, ergibt sich so ein Polygonzug bzw. eine (abschnittsweise) polygonale Beschreibung des Korrekturwertnäherungsverlaufs als Ganzes. Im Falle der Verwendung von stetigen und differenzierbaren Korrekturwertnäherungsverläufen kann analog gegebenenfalls auch ein "glatter", an den Grenzen der betreffenden Parameterbereiche differenzierbarer Verlauf sich ergeben. Eine solche Implementierung ist bereits durch die Verwendung parabolischer (Polynomgrad N = 2) funktionaler Zusammenhänge zu erreichen.

Je nach konkreter Implementierung von Ausführungsbeispielen der vorliegenden Erfindung kann es sich darüber hinaus anbieten, die Anzahl der verschiedenen Parameterbereiche und der zugehörigen Teilabschnitte des Korrekturwertnäherungsverlaufs zu beschränken. So kann es ratsam sein, beispielsweise den maximal zulässigen Betriebsparameterbereich bzw. Parameterbereich in nicht mehr als 50, 30, 20 oder 10 Parameterbereiche zu unterteilen, um beispielsweise Speicherplatz einzusparen, eine effiziente Implementierung zu gewährleisten oder die Zahl der Kalibriervorgänge zu beschränken. Anders ausgedrückt kann in manchen Ausführungsbeispielen der vorliegenden Erfindung ein maximal zulässiger Parameterbereich maximal in eine vorbestimmte Anzahl von einzelnen Parameterbereichen und zugehörigen Teilabschnitten des Korrekturwertnäherungsverlaufs unterteilt werden, wobei diese vorbestimmte Anzahl typischerweise eine natürliche Zahl größer als 2 ist.

Bei Ausführungsbeispielen der vorliegenden Erfindung besteht darüber hinaus die Möglichkeit, Alterungseffekte zu kompensieren. Zu diesem Zweck kann eine Auslösebedingung implementiert sein, die zur Durchführung eines entsprechenden abschnittsweisen Bestimmens eines parameterabhängigen Korrekturwertnäherungsverlaufs führt. Hierdurch kann beispielsweise in regelmäßigen Abständen, also beispielsweise bei Verstreichen einer vorbestimmten Zeitspanne, bei einem Einschalten des Sensors oder bei jedem n-ten Einschalten das Verfahren zur abschnittsweisen Bestimmung eines parameterabhängigen Korrekturwertnäherungsverlaufs ausgeführt werden, wobei n eine ganze Zahl größer als oder gleich 1 ist. Je nach zu diesem Zeitpunkt vorliegendem Parameterwert kann dann entsprechend des beschriebenen Verfahrens ein zweiter Teilabschnitt des Korrekturwertnäherungsverlaufs bestimmt werden, der gegebenenfalls auch zu einer feineren Unterteilung des maximal zugänglichen Parameterbereichs durch mehrere Parameterbereiche führt. Darüber hinaus kann in weiteren Ausführungsbeispielen der vorliegenden Erfindung auch der vorbestimmte erste Parameterkoeffizient gegebenenfalls angepasst oder rekalibriert werden, sofern dieser in einem entsprechend in dem Sensor 100 umfassten Speicher abgelegt ist, der ein erneutes Schreiben bzw. Speichern dieses Wertes ermöglicht. So kann beispielsweise die Verarbeitungsschaltung 120 für diese Werte, die gegebenenfalls einer Alterung unterworfen und daher einer Rekalibrierung zugänglich sein sollen, in einem nicht-flüchtigen Speicher abgespeichert werden. Solche nicht-flüchtigen Speicher sind beispielsweise Flash-Speicher, EEPROM-Speicher (EEPROM = electrically erasable programmable read-only memory = elektrisch löschbarer programmierbarer Nur-Lese-Speicher). Wird hingegen der Sensor 100 im Rahmen seines "normalen Sensorlebens" typischerweise nicht von einer Versorgungsspannung getrennt, so kann gegebenenfalls eine Implementierung eines nicht-flüchtigen Speichers auch durch einen flüchtigen Speicher ersetzt werden. Wird der erste Parameterkoeffizient neu bestimmt, kann es ratsam sein, auch die weiteren Teilabschnitte erneut zu ermitteln (soweit dies notwendig ist), um gegebenenfalls Stetigkeit oder andere Randbedingungen zu weiterhin zu erfüllen.

Auch wenn insbesondere im Zusammenhang mit den Fig. 3 und 4 ein Ausführungsbeispiel der vorliegenden Erfindung mit in Form eines Hall-Sensors 100 mit einem einzigen Hall-Sensorelement 110 beschrieben wurde, sind Ausführungsbeispiele der vorliegenden Erfindung selbstverständlich nicht auf Sensoren oder Hall-Sensoren 100 mit einem einzigen Sensorelement 110 beschränkt. In weiteren Ausführungsbeispielen können so auch mehrere Hall-Sensorelemente als Ersatz für das einzelne, in Fig. 3 gezeigte Hall-Sensorelement 110 zum Einsatz kommen. Diese können beispielsweise in Form von Serien-, Parallelschaltungen oder komplexeren Schaltungen verschaltet sein. Auch können verschiedene (Hall-)Sensortypen miteinander verschaltet sein.

Auch sind Ausführungsbeispiele der vorliegenden Erfindung selbstverständlich nicht nur auf Hall-Sensoren beschränkt. So können andere Magnetfeldsensoren, beispielsweise beliebige magnetoresistive Sensoren (xMR-Sensoren), also beispielsweise AMR-Sensoren (AMR = anisotropic magneto resistance = anisotroper Magnetwiderstand), GMR-Sensoren (GMR = giant magneto resistance = gigantischer Magnetwiderstand), TMR-Sensoren (TMR = tunnel magneto resistance = Tunnelmagnetwiderstand) oder EMR-Sensoren (EMR = extraordinary magneto resistance = außergewöhnlicher Magnetwiderstand) verwendet werden. Aber auch andere Sensoren, etwa Drucksensoren, Beschleunigungssensoren oder auf mechanische, elektrische, strahlungsbedingte oder andere physikalische Effekte ansprechende Sensoren können im Rahmen von Ausführungsbeispielen der vorliegenden Erfindung verwendet werden. Darüber hinaus kann es sich bei entsprechenden Sensoren 100 auch um solche handeln, die auf chemische oder biologische Effekte und Vorgänge ansprechen.

Im Rahmen unterschiedlicher Ausführungsbeispiele der vorliegenden Erfindung können die Sensoren 100 beispielsweise mit Hilfe der Verarbeitungsschaltung 120 ein von dem ersten Sensorelement 110 erhaltenes Messsignal in ein Ausgangssignal des Sensors 100 umsetzen, indem das Ausgangssignal in Abhängigkeit des Parametersignals des zweiten Sensorelements 130 auf Basis des Korrekturwertnäherungsverlaufs korrigiert wird. Zu diesem Zweck kann beispielsweise der in dem Messsignal des ersten Messelements 110 umfasste Messwert additiv bzw. subtraktiv, multiplikativ oder auch durch Division um den Wert des Korrekturwertnäherungsverlaufs bei dem entsprechenden Parameterwert des Parametersignals verändert werden. Somit kann beispielsweise eine Offset-Korrektur und/oder eine Skalierungs-Korrektur durchgeführt werden.

Ausführungsbeispiele der vorliegenden Erfindung können darüber hinaus als integrierte Schaltungen (IC = integrated circuit), als diskrete Implementierung unter Verwendung einzelner diskreter elektrischer und elektronischer Schaltelemente oder in Kombination beider Techniken realisiert werden. Darüber hinaus können Ausführungsbeispiele der vorliegenden Erfindung auf Basis einer analogen und/oder einer digitalen Signalverarbeitung erfolgen. Je nach konkreter Implementierung kann so beispielsweise eine Implementierung von Analog/Digital-Wandlern, digitalen Filtern, und gegebenenfalls einem Digital/Analog-Wandler ratsam sein. Ebenso können verschiedene Ausführungsbeispiele der vorliegenden Erfindung analoge Vorverstärker, Verstärker, elektrische Filter und andere analoge Komponenten umfassen.

Darüber hinaus können Ausführungsbeispiele der vorliegenden Erfindung im Rahmen größerer integrierter Schaltungen oder aber als einzelne Sensor-ICs implementiert werden. Auch eine Implementierung im Rahmen so genannter ASIC (ASIC = application specific integrated circuit = anwendungsspezifische integrierte Schaltung) sind möglich, die je nach Anwendungsgebiet eigene Prozessorschaltungen oder Prozessoren umfassen. In einem solchen Fall kann beispielsweise ein Ausführungsbeispiel eines Verfahrens zur abschnittsweisen Bestimmung eines parameterabhängigen Korrekturwertverlaufs oder eines anderen Ausführungsbeispiels der vorliegenden Erfindung als Software oder Firmware implementiert sein, die dann auf dem Prozessor oder der Prozessierungsschaltung abläuft. Beispiele hierfür stellen intelligente Sensoren dar, die als ASIC oder als IC mit entsprechenden Sensoren, Sensorelementen und/oder Sensoranordnungen hergestellt werden.

So ermöglichen es Ausführungsbeispiele der vorliegenden Erfindung beispielsweise eine Offset-Reduktion bei Hall-Sensoren durchzuführen, was beispielsweise im Bereich Automotive (Anwendungen im Kfz-Bereich) mit seinen hohen Temperaturanforderungen interessant sein kann. Die oben beschriebene Funktionsweise speziell bei Hall-Sensoren 100 kann, wie zuvor erläutert wurde, natürlich auf jegliche Art von Sensoren mit temperaturabhängigem oder parameterabhängigem Offset angewendet werden. Somit kann eine automatische Kalibrierung eines temperaturabhängigen oder parameterabhängigen Offsets bei jeder Art von Sensoren mit einem entsprechenden Offset erfolgen.

Abhängig von den Gegebenheiten können Ausführungsbeispiele der erfindungsgemäßen Verfahren in Hardware oder in Software implementiert werden. Die Implementierung kann auf einem digitalen Speichermedium, insbesondere einer Diskette, CD oder DVD mit elektronisch auslesbaren Steuersignalen erfolgen, die so mit einem programmierbaren Computersystem zusammenwirken können, dass Ausführungsbeispiele der erfindungsgemäßen Verfahren ausgeführt werden. Allgemein gesprochen bestehen somit Ausführungsbeispiele der vorliegenden Erfindung somit auch in einem Software-Programm-Produkt bzw. einem Computer-Programm-Produkt bzw. einem Programm-Produkt mit einem auf einem maschinenlesbaren Träger gespeicherten Programmcode zur Durchführung eines Ausführungsbeispiel eines erfindungsgemäßen Verfahrens, wenn das Software-Programmprodukt auf einem Rechner oder einem Prozessor abläuft. In anderen Worten ausgedrückt können Ausführungsbeispiele der vorliegenden Erfindung somit als ein Computer-Programm bzw. Software-Programm bzw. Programm mit einem Programmcode zum Durchführen eines Ausführungsbeispiels eines Verfahrens realisiert werden, wenn das Programm auf einem Prozessor abläuft. Der Prozessor kann hierbei von einem Computer, einer Chipkarte (smart card), einem ASIC, einem intelligenten Sensor oder einem anderen integrierten Schaltkreis gebildet sein.

Bei einem Ausführungsbeispiel des Verfahrens wird als Parameterwert ein Temperaturwert oder ein Druckwert verwendet.

Bei einem Ausführungsbeispiel des Verfahrens wird der erste 240-1 oder der zweite Teilabschnitt 240-2 des Korrekturnäherungsverlaufs 240 basierend auf dem funktionalen Zusammenhang

$$f(p) \ = \ \sum_{k=0}^{N} a_k \ \cdot \ p^k$$

beschrieben, wobei p ein Parameterwert, f(p) ein Wert des ersten oder des zweiten Abschnitts des Korrekturnäherungsverlaufs bei dem Parameterwert p, N eine positive ganze Zahl, die eine Ordnung eines Polynoms angibt, ak eine von k abhängende reelle Konstante und k eine ganze Zahl zwischen 0 und N ist, wobei beispielsweise N = 1, 2 oder 3 ist.

Bei einem Ausführungsbeispiel des Verfahrens umfasst der Schritt des Änderns des ersten Parameterwerts ein Ansteuern eines Heizelements 140, ein Ansteuern eines Kühlelements 140, ein Ansteuern eines Druckelements 140, ein Erhöhen einer Versorgungsleistung der Sensoranordnung, eines Sensorelements 110 der Sensoranordnung 100 oder eines Teils der Sensoranordnung 100 oder ein Reduzieren der Versorgungsleistung der Sensoranordnung 100, des Sensorelements 110 der Sensoranordnung 100 oder eines Teils der Sensoranordnung 100.

Bei einem Ausführungsbeispiel des Verfahrens ist der Parameter eine Temperatur, die Sensoranordnung eine Hall-Sensoranordnung 100, der Anfangskorrekturwert $p_0$ ein Anfangstemperaturwert $T_0$, der erste Parameterkoeffizient PK1 ein erster Temperaturkoeffizient TK, der erste Parameterbereich 215-1 ein erster Temperaturbereich 215-1, der zweite Parameterbereich 215-2 ein zweiter Temperaturbereich 215-2, der erste Parameterwert P1 ein erster Temperaturwert und der zweite Parameterwert P2 ein zweiter Temperaturwert.

Bei einem Ausführungsbeispiel der Sensoranordnung 100 umfasst die Parameteränderungseinrichtung 140 ein Heizelement, ein Piezoelement, ein Kühlelement oder ein Peltier-Element.

Bei einem Ausführungsbeispiel der Sensoranordnung 100 umfasst das erste Sensorelement 110 einen Hall-Sensor.

Bei einem Ausführungsbeispiel der Sensoranordnung 100 umfasst das zweite Sensorelement 130 einen Temperatursensor, ein PTC-Widerstandselement, ein NTC-Widerstandselement, ein Drucksensorelement oder ein Piezoelement.

Bei einem Ausführungsbeispiel der Sensoranordnung ist die Sensoranordnung 100 eine Hall-Sensoranordnung 100, das erste Sensorelement 110 ein Hall-Sensorelement 110, das zweite Sensorelement 130 ein Temperatur-Sensorelement 130 ist, und ist die Verarbeitungsschaltung 120 so ausgebildet, dass der Parameter eine Temperatur, der Anfangskorrekturwert $p_0$ ein Anfangstemperaturwert $T_0$, der erste Parameterkoeffizient PK1 ein erster Temperaturkoeffizient TK, der erste Parameterbereich 215-1 ein erster Temperaturbereich 215-1, der zweite Parameterbereich 215-2 ein zweiter Temperaturbereich 215-2, der erste Parameterwert P1 ein erster Temperaturwert und der zweite Parameterwert P2 ein zweiter Temperaturwert ist.

**Patentansprüche**

1. Verfahren zum abschnittsweisen Bestimmen eines parameterabhängigen Korrekturwertnäherungsverlaufs (240) zur Messsignalkorrektur einer Sensoranordnung (100), wobei bezüglich eines Anfangsparameterwerts (AW) ein Anfangskorrekturwert ($p_0$) und ein erster Parameterkoeffizient (PK1) vorgegeben sind, und wobei der Korrekturwertnäherungsverlauf (240) für einen ersten Parameterbereich (215-1) einen ersten Teilabschnitt (240-1) aufweist, der auf dem Anfangskorrekturwert (AW) und dem ersten Parameterkoeffizienten (PK1) basiert, mit folgenden Schritten:

   Bestimmen eines ersten Messsignalwerts bei einem der Sensoranordnung (100) zugeordneten, ersten Parameterwert (P1), wenn der erste Parameterwert (P1) eine vorbestimmte Bedingung erfüllt oder eine Auslösebedingung erfüllt ist;
   Ändern des der Sensoranordnung zugeordneten, ersten Parameterwerts (P1), um einen der Sensoranordnung zugeordneten, zweiten Parameterwert (P2) zu erhalten;
   Bestimmen eines zweiten Messsignalwerts bei dem zweiten Parameterwert (P2); und
   Ermitteln eines zweiten Teilabschnitts (240-2) des Korrekturwertnäherungsverlaufs (240) für einen zweiten Parameterbereich (215-2) basierend auf einem den zweiten Teilabschnitt beschreibenden funktionalen Zusammenhang unter Berücksichtigung des ersten (P1) und des zweiten Parameterwertes (P2), des ersten und des zweiten Messsignalwerts und des Anfangskorrekturwert (AW), wobei der zweite Teilabschnitt (240-2) des Korrekturwertnäherungsverlaufs (240) so ermittelt wird, dass der erste Parameterbereich (215-1) an den zweiten Parameterbereich (215-2) angrenzt; und
   wobei der erste Teilabschnitt (240-1) und der zweite Teilabschnitt (240-2) des Korrekturwertnäherungsverlaufs (240) stetig aneinander anschließen.

2. Verfahren nach Anspruch 1, das während eines laufenden Betriebs der Sensoranordnung (110) ausgeführt wird.

3. Verfahren nach einem der vorhergehenden Ansprüche, bei dem ein weiterer Teilabschnitt (240-3) des Korrekturwertnäherungsverlaufs (240) für einen weiteren Parameterbereich (215-3) ermittelt wird, so dass der weitere Parameterbereich (215-3) an den ersten (215-1) oder den zweiten Parameterbereich (215-2) angrenzt.

4. Verfahren nach Anspruch 3, bei dem der weitere Teilabschnitt (240-3) des Korrekturnäherungsverlaufs (240) so bestimmt wird, dass der weitere Parameterbereich (215-3) an den ersten Parameterbereich (215-1) angrenzt, und ferner folgende Schritte umfasst:

   Bestimmen eines weiteren ersten Messsignals für einen weiteren ersten Parameterwert des weiteren Parameterbereichs (215-3);
   Ändern des weiteren ersten Parameterwerts, um einen weiteren zweiten Parameterwert zu erhalten;
   Bestimmen eines weiteren zweiten Messsignals bei dem weiteren zweiten Parameterwert; und
   Ermitteln des weiteren Teilabschnitts (240-3) des Korrekturwertnäherungsverlaufs (240) für den weiteren Parameterbereich (215-3) basierend auf einem den weiteren Teilabschnitt (240-3) beschreibenden funktionalen Zusammenhang unter Berücksichtigung des weiteren ersten und des weiteren zweiten Parameterwerts, des weiteren ersten und des weiteren zweiten Messsignalwerts und des ersten Teilabschnitts (240-1),
   wobei das Ermitteln so erfolgt, dass der weitere Teilabschnitt (240-3) des Korrekturwertnäherungsverlaufs (240) stetig an den ersten Teilabschnitt (240-1) anschließt.

5. Verfahren nach Anspruch 3, bei dem der weitere Teilabschnitt (240-3) des Korrekturnäherungsverlaufs (240) so bestimmt wird, dass der weitere Parameterbereich (215-3) an den zweiten Parameterbereich (215-2) angrenzt und ferner folgende Schritte umfasst:

   Bestimmen eines weiteren ersten Messsignals für einen weiteren ersten Parameterwert des weiteren Parameterbereichs (215-3);
   Ändern des weiteren ersten Parameterwerts, um einen weiteren zweiten Parameterwert zu erhalten;
   Bestimmen eines weiteren zweiten Messsignals bei dem weiteren zweiten Parameterwert; und
   Ermitteln des weiteren Teilabschnitts (240-3) des Korrekturwertnäherungsverlaufs (240) für den weiteren Parameterbereich (215-3) basierend auf einem den weiteren Teilabschnitt (240-3) beschreibenden funktionalen Zusammenhang unter Berücksichtigung des weiteren ersten und des weiteren zweiten Parameterwerts, des weiteren ersten und des weiteren zweiten Messsignalwerts und des zweiten Teilabschnitts (240-2),
   wobei das Ermitteln so erfolgt, dass der weitere Teilabschnitt (240-3) des Korrekturwertnäherungsverlaufs (240) stetig an den zweiten Teilabschnitt (240-2) anschließt.

6. Verfahren nach einem der vorhergehenden Ansprüche, bei dem die vorbestimmte Beziehung erfüllt wird, wenn der erste Parameterwert nicht in dem ersten Parameterbereich liegt.

7. Verfahren nach einem der vorhergehenden Ansprüche, wobei die Auslösebedingung durch ein Einschalten oder nach einem Einschalten der Sensoranordnung (100) erfüllt ist.

8. Verfahren nach einem der vorhergehenden Ansprüche, bei dem der erste (240-1) oder der zweite Teilabschnitt (240-2) des Korrekturnäherungsverlaufs (240) basierend auf dem funktionalen Zusammenhang

$$f(p) \;=\; \sum_{k=0}^{N} a_k \cdot p^k$$

beschrieben wird, wobei p ein Parameterwert, f(p) ein Wert des ersten oder des zweiten Abschnitts des Korrekturnäherungsverlaufs bei dem Parameterwert p, N eine positive ganze Zahl, die eine Ordnung eines Polynoms angibt, $a_k$ eine von k abhängende reelle Konstante und k eine ganze Zahl zwischen 0 und N ist.

9. Verfahren nach einem der vorhergehenden Ansprüche, bei dem der erste Abschnitt des Korrekturwertnäherungsverlaufs basierend auf dem funktionalen Zusammenhang

$$f_1(p) \;=\; pk_1 \cdot (p - p_0) + f_0$$

und der zweite Abschnitt des Korrekturnäherungsverlaufs basierend auf dem funktionalen Zusammenhang

$$f_2(p) \;=\; pk_2 \cdot (p - p_g) + pk_1 \cdot (p_g - p_o) + f_o$$

beschrieben wird, wobei p ein Parameterwert, $f_1(P)$ ein Wert des ersten Abschnitts des Korrekturnäherungsverlaufs bei dem Parameterwert p, $f_2(p)$ ein Wert des zweiten Abschnitts des Korrekturnäherungsverlaufs bei dem Parameterwert p, $pk_1$ der erste Parameterkoeffizient, $f_0$ der Anfangskorrekturwert, $pk_2$ ein auf dem ersten Parameterwert, dem zweiten Parameterwert, dem ersten Messsignalwert und dem zweiten Messsignalwert beruhender zweiter Parameterkoeffizient und $p_g$ ein Grenzparameterwert ist, bei dem ein dem ersten Abschnitt des Korrekturnäherungsverlaufs zugrunde liegender Parameterbereich an einen dem zweiten Abschnitt des Korrekturwertnäherungsverlaufs zugrunde liegenden zweiten Abschnitt des Korrekturwertnäherungsverlaufs zugrunde liegenden zweiten Abschnitts des Korrekturwertnäherungsverlaufs benachbart ist.

10. Sensoranordnung (100) mit folgenden Merkmalen:

einem ersten Sensorelement (110) zum Bereitstellen von Messsignalen;
einem zweiten Sensorelement (130) zum Bereitstellen von Parametersignalen; und
einer Verarbeitungsschaltung (120), die mit dem ersten (110) und dem zweiten Sensorelement (120) gekoppelt und ausgebildet ist, um von dem ersten Sensorelement (110) Messsignale und von dem zweiten Sensorelement (120) Parametersignale zu erfassen,
wobei die Verarbeitungsschaltung (120) ferner ausgebildet ist, um ein erstes Messsignal bei einem der Sensoranordnung (100) zugeordneten, einem ersten Parametersignal entsprechenden, ersten Parameterwert zu bestimmen, wenn der erste Parameterwert eine vorbestimmte Bedingung erfüllt oder eine Auslösebedingung erfüllt ist;
wobei die Verarbeitungsschaltung (120) ferner ausgebildet ist, um den der Sensoranordnung (100) zugeordneten, ersten Parameterwert zu ändern, um einen der Sensoranordnung (100) zugeordneten, einem zweiten Parametersignal entsprechenden, zweiten Parameterwert zu erhalten;
wobei die Verarbeitungsschaltung (120) ferner ausgebildet ist, um einen zweiten Messsignalwert bei dem zweiten Parameterwert zu bestimmen; und

wobei die Verarbeitungsschaltung (120) ferner ausgebildet ist, um einen zweiten Teilabschnitt des Korrekturnäherungsverlaufs in einem zweiten Parameterbereich zu ermitteln, der auf einem den zweiten Teilabschnitt (240-2) beschreibenden funktionalen Zusammenhang unter Berücksichtigung des ersten und des zweiten Parameterwerts, des ersten und des zweiten Messsignalwerts und einem Anfangskorrekturwert (AW) basiert, wobei ein erster Teilabschnitt (240-1) des Korrekturwertnäherungsverlaufs (240) in einem ersten Parameterbereich (215-1) auf dem vorgegebenen Anfangskorrekturwert (AW) und dem ersten vorgegebenen Parameterkoeffizienten (TK) basiert;

wobei der zweite Teilabschnitt (240-2) des Korrekturwertnäherungsverlaufs (240) so ermittelt wird, dass der erste Parameterbereich (215-1) an den zweiten Parameterbereich (215-2) angrenzt; und

wobei der erste Teilabschnitt (240-1) und der zweite Teilabschnitt (240-2) des Korrekturwertnäherungsverlaufs (240) stetig aneinander anschließen.

11. Sensoranordnung (100) nach Anspruch 10, bei dem die Verarbeitungsschaltung (120) ausgebildet ist, um die Änderung des ersten Parameterwerts durch ein Erhöhen einer Versorgungsleistung der Sensoranordnung (100), des ersten Sensorelements (110), des zweiten Sensorelements (130) oder eines Teils der Sensoranordnung (100) oder durch ein Reduzieren der Versorgungsleistung der Sensoranordnung (100), des ersten Sensorelements (110), des zweiten Sensorelements (130) oder eines Teils der Sensoranordnung (100) zu bewirken.

12. Sensoranordnung (100) nach einem der Ansprüche 10 oder 11, die ferner eine zusätzliche Parameteränderungseinrichtung (140) aufweist, die mit der Verarbeitungsschaltung (120) gekoppelt ist, und bei der die Verarbeitungsschaltung (140) ferner ausgebildet ist, um der Parameteränderungseinrichtung ein Signal bereitzustellen, um die Änderung des ersten Parameterwerts zu bewirken.

13. Sensoranordnung (100) nach Anspruch 12, bei dem die Parameteränderungseinrichtung (140) benachbart zu dem ersten Sensorelement (110) angeordnet ist, um eine Parameteränderung bezüglich des ersten Sensorelements (110) hervorrufbar zu machen.

14. Sensoranordnung (100) nach einem der Ansprüche 10 bis 13, bei dem die Verarbeitungsschaltung (120) ferner ausgebildet ist, um ein Ausgangssignal basierend auf einem Messsignal auszugeben, wobei das Ausgangssignal in Abhängigkeit eines in einem Parametersignal umfassten Parameterwerts in Abhängigkeit des Korrekturwertnäherungsverlaufs korrigiert ist.

15. Programm mit einem Programmcode zum Durchführen eines Verfahrens nach Anspruch 1, wenn das Programm auf einem Prozessor abläuft.

**Claims**

1. A method of determining, section after section, a parameter-dependent correction value approximation course (240) for a measurement signal correction of a sensor arrangement (100), wherein with regard to an initial parameter value (AW) an initial correction value ($p_0$) and a first parameter coefficient (PK1) are given, and wherein the correction value approximation course (240) comprises a first partial section (240-1) for a first parameter range (215-1) which is based on the initial correction value (AW) and the first parameter coefficient (PK1), comprising:

determining a first measurement signal value with a first parameter value (P1) associated with the sensor arrangement (100), when the first parameter value (P1) fulfils a predetermined condition or a trigger condition is fulfilled;

changing the first parameter value (P1) associated with the sensor arrangement to obtain a second parameter value (P2) associated with the sensor arrangement;

determining a second measurement signal value with the second parameter value (P2); and

determining a second partial section (240-2) of the correction value approximation course (240) for a second parameter range (215-2) based on a functional connection describing the second partial section considering the first (P1) and the second parameter value (P2), the first and the second measurement signal value and the initial correction value (AW),

wherein the second partial section (240-2) of the correction value approximation course (240) is determined so that the first parameter range (215-1) is adjacent to the second parameter range (215-2); and

wherein the first partial section (240-1) and the second partial section (240-2) of the correction value approximation course (240) are continuously adjacent to each other.

**2.** The method according to claim 1, which is performed during operation of the sensor arrangement (110).

**3.** The method according to any of the preceding claims, wherein a further partial section (240-3) of the correction value approximation course (240) is determined for a further parameter range (215-3), so that the further parameter range (215-3) is adjacent to the first (215-1) or the second parameter range (215-2).

**4.** The method according to claim 3, wherein the further partial section (240-3) of the correction approximation course (240) is determined so that the further parameter range (215-3) is adjacent to the first parameter range (215-1) and which further includes the following steps:

determining a further first measurement signal for a further first parameter value of the further parameter range (215-3);
changing the further first parameter value to obtain a further second parameter value;
determining a further second measurements signal with the further second parameter value; and
determining the further partial section (240-3) of the correction value approximation course (240) for the further parameter range (215-3) based on a functional connection describing the further partial section (240-3) considering the further first and the further second parameter value, the further first and the further second measurement value and the first partial section (240-1),
wherein the determination is executed so that the further partial section (240-3) of the correction value approximation course is continuously adjacent to the first partial section (240-1).

**5.** The method according to claim 3, wherein the further partial section (240-3) of the correction approximation course (240) is determined so that the further parameter range (215-3) is adjacent to the second parameter range (215-2) and further includes the following steps:

determining a further first measurement signal for a further first parameter value of the further parameter range (215-3);
changing the further first parameter value to obtain a further second parameter value;
determining a further second measurement signal in the further second parameter value; and
determining the further partial section (240-3) of the correction value approximation course (240) for the further parameter range (215-3) based on a functional connection describing the further partial section (240-3) considering the further first and the further second parameter value, the further first and the further second measurement signal value and the second partial section (240-2),
wherein the determination is executed so that the further partial section (240-3) of the correction value approximation course (240) is continuously adjacent to the second partial section (240-2).

**6.** The method according to one of the preceding claims, wherein the predetermined condition is fulfilled when the first parameter value is not in the first parameter range.

**7.** The method according to one of the preceding claims, wherein the trigger condition is fulfilled by switching on or after switching on the sensor arrangement (100).

**8.** The method according to one of the preceding claims, wherein the first (240-1) or the second partial section (240-2) of the correction approximation course (240) is described based on the functional connection

$$f(p) = \sum_{k=0}^{N} a_k \cdot p^k$$

wherein p is a parameter value, f(p) is a value of the first or the second section of the correction approximation course with the parameter value p, N is a positive integer number indicating an order of a polynomial, $a_k$ is a real constant depending on k and k is an integer number between 0 and N.

**9.** The method according to one of the proceeding claims, wherein the first section of the correction value approximation course is described based on the functional connection

$$f_1(p) = pk_1 \cdot (p - p_0) + f_0$$

and the second section of the correction approximation course is described on the functional connection

$$f_2(p) = pk_2 \cdot (p - p_g) + pk_1 \cdot (p_g - p_o) + f_o$$

wherein p is a parameter value, $f_1(P)$ a value of the first section of the correction approximation course with the parameter value p, $f_2(p)$ is a value of the second section of the correction approximation course with the parameter value p, $pk_1$ is the first parameter coefficient, $f_0$ the initial correction value, $pk_2$ a second parameter coefficient based on the first parameter value, the second parameter value, the first measurement signal value and the second measurement signal value, and pg is a threshold parameter value, wherein a parameter range underlying the first section of the correction approximation course is adjacent to a second section of the correction value approximation courser underlying the second section of the correction value approximation course underlying the second section of the correction value approximation course.

10. A sensor arrangement (100), comprising:

a first sensor element (110) for providing measurement signals;
a second sensor element (130) for providing parameter signals; and
a processing circuit (120) coupled to the first (110) and the second sensor element (120) and implemented to detect measurement signals from the first sensor element (110) and parameter signals from the second sensor element (120),
the processing circuit (120) being further implemented to determine a first measurement signal with a first parameter value associated with the sensor arrangement (100) and corresponding to a first parameter signal, when the first parameter value fulfils a predetermined condition or a trigger condition is fulfilled;
the processing circuit (120) being further implemented to change the first parameter value associated with the sensor arrangement (100) to obtain a second parameter value associated with the sensor arrangement (100) and corresponding to a second parameter signal;
the processing circuit (120) being further implemented to determine a second measurement signal value with the second parameter value; and
the processing circuit (120) being further implemented to determine a second partial section of the correction approximation course in a second parameter range which is based on a functional connection describing the second partial section (240-2), considering the first and the second parameter value, the first and the second measurement signal value an initial correction value (AW),
wherein a first partial section (240-1) of the correction value approximation course (240) in a first parameter range (215-1) is based on the predetermined initial correction value (AW) and the first predetermined parameter coefficient (TK);
wherein the second partial section (240-2) of the correction value approximation course (240) is determined so that the first parameter range (215-1) is adjacent to the second parameter range (215-2); and
wherein the first partial section (240-1) and the second partial section (240-2) of the correction value approximation course (240) are continuously adjacent.

11. The sensor arrangement (100) according to claim 10, wherein the processing circuit (120) is implemented to cause the change of the first parameter value by increasing a supply power of the sensor arrangement (100), the first sensor element (110), the second sensor element (130) or a part of the sensor arrangement (100) or by reducing the supply power of the sensor arrangement (100), the first sensor element (110), the second sensor element (130) or a part of the sensor arrangement (100).

12. The sensor arrangement (100) according to one of claims 10 or 11, further comprising an additional parameter changing means (140) which is coupled the processing circuit (120), and wherein the processing circuit (140) is further implemented to provide a signal to the parameter changing means to cause a change of the first parameter value.

13. The sensor arrangement (100) according to claim 12, wherein the parameter changing means (140) is arranged adjacent to the first sensor element (110) to make a parameter change with regard to the first sensor element (110) produceable.

14. A sensor arrangement (100) according to one of claims 10 to 13, wherein the processing circuit (120) is further implemented to output an output signal based on a measurement signal, wherein the output signal is corrected depending on a parameter value included in a parameter signal depending on the correction value approximation course.

15. A program having a program code for executing a method according to claim 1 when the program is executed on a processor.

**Revendications**

1. Procédé pour déterminer par segments une courbe d'approximation de valeurs de correction en fonction de paramètres (240) en vue de la correction du signal de mesure d'un système de détection (100), dans lequel sont prédéterminés, par rapport à une valeur de paramètre initiale (AW), une valeur de correction initiale ($p_0$) et un premier coefficient de paramètre (PK1), et dans lequel la courbe d'approximation de valeurs de correction (240) présente, pour une première plage de paramètres (215-1), un premier segment partiel (240-1) qui est basé sur la valeur de correction initiale (AW) et le premier coefficient de paramètre (PK1 ),
aux étapes suivantes consistant à:

déterminer une première valeur de signal de mesure à une première valeur de paramètre (P1) associée au système de détection (100) lorsque la première valeur de paramètre (P1) remplit une condition prédéterminée ou qu'une condition de déclenchement est déterminée;
modifier la première valeur de paramètre (P1) associée au système de détection, pour obtenir une deuxième valeur de paramètre (P2) associée au système de détection;
déterminer une deuxième valeur de signal de mesure à une deuxième valeur de paramètre (P2); et
déterminer un deuxième segment partiel (240-2) de la courbe d'approximation de valeur de correction (240) pour une deuxième plage de paramètres (215-2) sur base d'un rapport fonctionnel décrivant le deuxième segment partiel, compte tenu de la première (P1) et de la deuxième valeur de paramètre (P2), de la première et de la deuxième valeur de signal de mesure et de la valeur de correction initiale (AW),
le deuxième segment partiel (240-2) de la courbe d'approximation de valeur de correction (240) étant déterminé de sorte que la première plage de paramètres (215-1) soit adjacente à la deuxième plage de paramètres (215-2); et
le premier segment partiel (240-1) et le deuxième segment partiel (240-2) de la courbe d'approximation de valeur de correction (240) étant en continu contigus l'un à l'autre.

2. Procédé selon la revendication 1, réalisé pendant un fonctionnement en cours du système de détection (110).

3. Procédé selon l'une des revendications précédentes, dans lequel un autre segment partiel (240-3) de la courbe d'approximation de valeur de correction (240) est déterminé pour une autre plage de paramètres (215-3), de sorte que l'autre plage de paramètres (215-3) soit adjacente à la première (215-1) ou à la deuxième plage de paramètres (215-2).

4. Procédé selon la revendication 3, dans lequel l'autre segment partiel (240-3) de la courbe d'approximation de valeur de correction (240) est déterminé de sorte que l'autre plage de paramètres (215-3) soit adjacente à la première plage de paramètres (215-1), et comportant par ailleurs les étapes suivantes consistant à:

déterminer un autre premier signal de mesure pour une autre première valeur de paramètre de l'autre plage de paramètres (215-3);
modifier l'autre première valeur de paramètre, pour obtenir une autre deuxième valeur de paramètre;
déterminer un autre deuxième signal de mesure à l'autre deuxième valeur de paramètre; et
déterminer l'autre segment partiel (240-3) de la courbe d'approximation de valeur de correction (240) pour l'autre plage de paramètres (215-3) sur base d'un autre rapport fonctionnel décrivant l'autre segment partiel (240-3), compte tenu de l'autre première et de l'autre deuxième valeur de paramètre, de l'autre première et de l'autre deuxième valeur de signal de mesure et du premier segment partiel (240-1),
la détermination ayant lieu de sorte que l'autre segment partiel (240-3) de la courbe d'approximation de valeur de correction (240) soit en continu contigu au premier segment partiel (240-1).

5. Procédé selon la revendication 3, dans lequel l'autre segment partiel (240-3) de la courbe d'approximation de valeur de correction (240) est déterminé de sorte que l'autre plage de paramètres (215-3) soit adjacente à la deuxième plage de paramètres (215-2) et comprenant par ailleurs les étapes suivantes consistant à:

déterminer un autre premier signal de mesure pour une autre première valeur de paramètre de l'autre plage de paramètres (215-3);
modifier l'autre première valeur de paramètre, pour obtenir une autre deuxième valeur de paramètre;
déterminer un autre deuxième signal de mesure à l'autre deuxième valeur de paramètre; et
déterminer l'autre segment partiel (240-3) de la courbe d'approximation de valeur de correction (240) pour l'autre plage de paramètres (215-3) sur base d'un autre rapport fonctionnel décrivant l'autre segment partiel (240-3), compte tenu de l'autre première et de l'autre deuxième valeur de paramètre, de l'autre première et de l'autre deuxième valeur de signal de mesure et du deuxième segment partiel (240-2),
la détermination ayant lieu de sorte que l'autre segment partiel (240-3) de la courbe d'approximation de valeur de correction (240) soit en continu contigu au deuxième segment partiel (240-2).

6. Procédé selon l'une des revendications précédentes, dans lequel le rapport prédéterminé est rempli lorsque la première valeur de paramètre ne se situe pas dans la première plage de paramètres.

7. Procédé selon l'une des revendications précédentes, dans lequel la condition de déclenchement est remplie par un enclenchement ou après un enclenchement du système de détection (100).

8. Procédé selon l'une des revendications précédentes, dans lequel le premier (240-1) ou le deuxième segment partiel (240-2) de la courbe d'approximation de valeur de correction (240) est décrit sur base du rapport fonctionnel

$$f(p) = \sum_{k=0}^{N} a_k \cdot p^k,$$

p étant une valeur de paramètre, f(p) une valeur du premier ou du deuxième segment de la courbe d'approximation de valeur de correction à la valeur de paramètre p, N un nombre entier positif indiquant un ordre d'un polynôme, $a_k$ une constante réelle fonction de k et k un nombre entier entre 0 N.

9. Procédé selon l'une des revendications précédentes, dans lequel le premier segment de la courbe d'approximation de valeur de correction est décrit sur base du rapport fonctionnel

$$f_1(p) = pk_1 \cdot (p - p_0) + f_0,$$

et le deuxième segment de la courbe d'approximation de valeur de correction est décrit sur base du rapport fonctionnel

$$f_2(p) = pk_2 \cdot (p - p_g) + pk_1 (p_g - p_0) + f_0,$$

p est une valeur de paramètre, $f_1(p)$ une valeur du premier segment de la courbe d'approximation de valeur de correction à la valeur de paramètre p, $f_2(p)$ une valeur du deuxième segment de la courbe d'approximation de valeur de correction à la valeur de paramètre p, $pk_1$ le premier coefficient de paramètre, $f_0$ la valeur de correction initiale, $pk_2$ un deuxième coefficient de paramètre basé sur la première valeur de paramètre, la deuxième valeur de paramètre, la première valeur de signal de mesure et la deuxième valeur de signal de mesure, et pg une valeur de paramètre limite à laquelle une plage de paramètres à la base du premier segment de la courbe d'approximation de valeur de correction est adjacente à un deuxième segment de la courbe d'approximation de valeur de correction à la base du deuxième segment de la courbe d'approximation de valeur de correction à la base du deuxième segment de la courbe d'approximation de valeur de correction.

**10.** Système de détection (100) aux caractéristiques suivantes:

un premier élément capteur (110) destiné à mettre à disposition des signaux de mesure;
un deuxième élément capteur (130) destiné à mettre à disposition des signaux de paramètre; et
un circuit de traitement (120) qui est couplé au premier (110) et au deuxième élément capteur (120) et réalisé pour saisir du premier élément capteur (110) des signaux de mesure et du deuxième élément capteur (120) des signaux de paramètre,
le circuit de traitement (120) étant par ailleurs réalisé pour déterminer un premier signal de mesure à une première valeur de paramètre, correspondant à un premier signal de paramètre, associée au système de détection (100) lorsque la première valeur de paramètre remplir une condition prédéterminée ou qu'une condition de déclenchement est remplie;
le circuit de traitement (120) étant par ailleurs réalisé pour modifier la première valeur de paramètre associée au système de détection (100), pour obtenir une deuxième valeur de paramètre, correspondant à un deuxième signal de paramètre, associée au système de détection (100);
le circuit de traitement (120) étant par ailleurs réalisé pour déterminer une deuxième valeur de signal de mesure à la deuxième valeur de paramètre; et
le circuit de traitement (120) étant par ailleurs réalisé pour déterminer un deuxième segment partiel de la courbe d'approximation de valeur de correction dans une deuxième plage de paramètres basée sur un rapport fonctionnel décrivant le deuxième segment partiel (240-2), compte tenu de la première et de la deuxième valeur de paramètre, de la première et de la deuxième valeur de signal de mesure et d'une valeur de correction initiale (AW), un premier segment partiel (240-1) de la courbe d'approximation de valeur de correction (240) dans une première plage de paramètres (215-1) étant basé sur la valeur de correction initiale prédéterminée (AW) et le premier coefficient de paramètre prédéterminé (TK);
le deuxième segment partiel (240-2) de la courbe d'approximation de valeur de correction (240) étant déterminé de sorte que la première plage de paramètres (215-1) soit adjacente à la deuxième plage de paramètres (215-2); et
le premier segment partiel (240-1) et le deuxième segment partiel (240-2) de la courbe d'approximation de valeur de correction (240) étant en continu contigus l'un à l'autre.

**11.** Système de détection (100) selon la revendication 10, dans lequel le circuit de traitement (120) est réalisé de manière à provoquer la modification de la première valeur de paramètre en augmentant une puissance d'alimentation du système de détection (100), du premier élément capteur (110), du deuxième élément capteur (130) ou d'une partie du système de détection (100) ou en réduisant la puissance d'alimentation du système de détection (100), du premier élément capteur (110), du deuxième élément capteur (130) ou d'une partie du système de détection (100).

**12.** Système de détection (100) selon l'une des revendications 10 ou 11, présentant par ailleurs un moyen de modification de paramètre additionnel (140) couplé au circuit de traitement (120), et dans lequel le circuit de traitement (140) est par ailleurs réalisé pour mettre un signal à disposition du moyen de modification de paramètre, pour provoquer la modification de la première valeur de paramètre.

**13.** Système de détection (100) selon la revendication 12, dans lequel le moyen de modification de paramètre (140) est disposé dans le voisinage du premier élément capteur (110), pour faire que puisse être provoquée une modification de paramètre par rapport au premier élément capteur (110).

**14.** Système de détection (100) selon l'une des revendications 10 à 13, dans lequel le circuit de traitement (120) est par ailleurs réalisé pour sortir un signal de sortie sur base d'un signal de mesure, le signal de sortie étant corrigé en fonction d'une valeur de paramètre incluse dans un signal de paramètre, en fonction de la courbe d'approximation de valeur de correction.

**15.** Programme avec un code de programme pour réaliser un procédé selon la revendication 1 lorsque le programme est exécuté sur un processeur.

**FIGUR 1A**

FIGUR 1B

FIGUR 2

FIGUR 3

**FIGUR 4**